# EUROPÄISCHE PATENTSCHRIFT

(11) **EP 2 122 948 B1**
(45) Veröffentlichungstag und Bekanntmachung des Hinweises auf die Patenterteilung: **19.08.2015**
(21) Anmeldenummer: 07856616.3
(22) Anmeldetag: 12.12.2007
(51) Int. Cl.: H04L 12/58, G06Q 10/10

(54) **VERWALTUNG VON EINLADUNGEN MIT IN TELEKOMMUNIKATIONSNETZEN BETREIBBAREN ENDGERÄTEN**
MANAGEMENT OF INVITATIONS WITH TERMINAL DEVICES THAT CAN BE OPERATED IN TELECOMMUNICATION NETWORKS
GESTION D'INVITATIONS AU MOYEN DE TERMINAUX POUVANT FONCTIONNER DANS DES RÉSEAUX DE TÉLÉCOMMUNICATION

(30) Priorität: 13.12.2006 DE 102006059279
(43) Veröffentlichungstag der Anmeldung: 25.11.2009
(73) Patentinhaber: Vodafone Holding GmbH, 40213 Düsseldorf (DE)
(72) Erfinder: DEGEN, Helmut, Princeton Junction, NJ 08550 (US); CLAVIN, Neil, 40211 Düsseldorf (DE); SCHLIWA, Karin, 50677 Köln (DE); LEGIONNET-KLEES, Gisele, 40479 Düsseldorf (DE)
(74) Vertreter: Ring & Weisbrodt
(86) Internationale Anmeldenummer: PCT/EP2007/010868
(87) Internationale Veröffentlichungsnummer: WO 2008/071409

(56) Entgegenhaltungen:
- DE-A1-102004 034 883
- US-A1- 2004 148 356
- SILVERBERG MICROSOFT S MANSOUR NETSCAPE F DAWSON LOTUS R HOPSON ON TECHNOLOGIES S: "iCalendar Transport-Independent Interoperability Protocol (iTIP) Scheduling Events, BusyTime, To-dos and Journal Entries; rfc2446.txt" IETF STANDARD, INTERNET ENGINEERING TASK FORCE, IETF, CH, 1. November 1998 (1998-11-01), XP015008230 ISSN: 0000-0003

## Beschreibung

Die vorliegende Erfindung betrifft ein Verfahren zur Verwaltung von Einladungen mit in Telekommunikationsnetzen betreibbaren Endgeräten, vorzugsweise mit in Mobilfunknetzen betreibbaren mobilen Endgeräten, insbesondere gemäß einem GSM-, GPRS- und/oder UMTS-Funknetzstandard.

Ferner betrifft die vorliegende Erfindung ein Endgerät zum Betrieb in Telekommunikationsnetzen, vorzugsweise zum Betrieb in Mobilfunknetzen, insbesondere gemäß einem GSM-, GPRS- und/oder UMTS- Funknetzstandard, welches ausgebildet und/oder eingerichtet ist ein erfindungsgemäßes Verfahren zumindest teilweise auszuführen.

Eine Einladung im Sinne der vorliegenden Erfindung ist eine Aufforderung einer Person an wenigstens eine bestimmte Person oder an eine bestimmte Gruppe von Personen um Mitteilung ob diese an einer durch den Ort, die Zeit, den Zweck beziehungsweise den Anlass charakterisierten Veranstaltung teilnimmt beziehungsweise teilnehmen.

Seitens der DE 10 2004 034 883 A1 wird ein serverbasiertes Verfahren zur Koordination von Terminen mit in Mobilfunknetzen betreibbaren mobilen Endgeräten offenbart, wobei Termindaten sowohl seitens eines mobilen Endgerätes als auch seitens einer Datenbank einer zentralen Recheneinrichtung gespeichert werden. Ein Austausch von Termindaten zwischen mobilen Endgeräten erfolgt ausschließlich unter Nutzung der in der Datenbank der zentralen Recheneinrichtung gespeicherten Termindaten. Von Nachteil ist dabei, dass eine direkte Verwaltung von Termindaten seitens der jeweilig beteiligten mobilen Endgeräte nicht möglich ist. Darüber hinaus müssen bei dem Verfahren gemäß der DE 10 2004 034 883 A1seitens des Mobilfunknetzes zusätzliche Ressourcen für die Recheneinrichtung, deren Datenbank sowie die entsprechende Kommunikation zwischen denselben und den beteiligten mobilen Endgeräten bereitgestellt und unterhalten werden.
Weiterer Stand der Technik im Bereich der Koordination von Terminen ist in US 2004/0148356 offenbart.

Darüber hinaus sind die bisher zur Verfügung stehenden Möglichkeiten zur Verwaltung von Einladungen mit in Telekommunikationsnetzen betreibbaren Endgeräten, insbesondere mit in Mobilfunknetzen betreibbaren mobilen Endgeräten, beschränkt, insbesondere hinsichtlich nutzerindividualisierter Kommunikationsanwendungen, beispielsweise für Gruppen oder dergleichen Personenkreise.

Zur technischen Lösung wird mit der vorliegenden Erfindung ein Verfahren zur Verwaltung von Einladungen mit in Telekommunikationsnetzen betreibbaren Endgeräten, vorzugsweise mit in Mobilfunknetzen betreibbaren mobilen Endgeräten, vorgeschlagen, welches durch die folgenden seitens eines Endgerätes ausgeführten Verfahrensschritte gekennzeichnet ist:
a) Empfangen eines Einladungsobjektes;
b) Erstellen eines Einladungsobjektes durch Kumulieren des empfangenden Einladungsobjektes mit einem seitens des Endgerätes vorliegenden Einladungsobjekt;
c) Anzeigen des erstellten Einladungsobjektes und
d) Senden des erstellten Einladungsobjektes an Einladungsbeteiligte.

Das erfindungsgemäße Verfahren erlaubt insbesondere aufgrund der kumulierten Erstellung eines Einladungsobjektes aus einem empfangenden Einladungsobjekt mit einem seitens des Endgerätes vorliegenden Einladungsobjektes eine vereinfachte und hinsichtlich der Individualisierung gesteigerte Nutzbarkeit hinsichtlich der erfindungsgemäßen Verwaltung von Einladungen. Das zur Kumulierung seitens des Endgerätes vorliegende Einladungsobjekt kann dabei entweder seitens des Endgerätes erstellt, gespeichert und/oder über das Telekommunikationsnetz seitens des Endgerätes empfangen worden sein.

Eine weitere vorteilhafte Ausgestaltung der Erfindung ist gekennzeichnet durch wenigstens eine Modifikation des erstellten Einladungsobjektes vor dem Senden an Einladungsbeteiligte. Vorteilhafterweise erfolgt die Modifikation des erstellten Einladungsobjektes nach dem Anzeigen des erstellten Einladungsobjektes. Eine weitere vorteilhafte Ausgestaltung der Erfindung sieht vor, dass die Modifikation durch Änderung des Zustandes und/oder eines möglichen Zustandes des empfangenden Einladungsobjektes durch nutzerseitige Reaktion auf das empfangene Einladungsobjekt zumindest bei nutzerseitiger Betätigung einer Eingabeeinrichtung des Endgerätes erfolgt. Die nutzerseitige Betätigung einer Eingabeeinrichtung des Endgerätes erfolgt dabei vorteilhafterweise durch Betätigung einer Taste einer Tastatur des Endgerätes, durch Spracheingabe über ein Mikrofon des Endgerätes und/oder durch Bewegung des Endgerätes, wobei seitens des Endgerätes wenigstens ein die Bewegung des Endgerätes erfassendes Sensorikelement vorhanden ist.

In einer weiteren besonders vorteilhaften Ausgestaltung der Erfindung werden im Rahmen der verfahrensgemäßen Ausführung seitens des Endgerätes die folgenden Verfahrensschritte ausgeführt:
a1) Empfangen des Einladungsobjektes von einer Empfangseinheit des Endgerätes;
a2) Übergeben des empfangenen Einladungsobjektes von der Empfangseinheit an eine Einrichtung des Endgerätes zur Verwaltung von Einladungsobjekten (Einladungsobjektverwaltungseinrichtung);
b1) Erstellen einer Einladungsübersicht durch Kumulation des empfangenen Einladungsobjektes mit einem in einer Speichereinheit des Endgerätes gespeicherten Einladungsobjekt durch die Einladungsobjektverwaltungseinrichtung;
b2) Auslösen einer Erinnerung an das empfangene Einladungsobjekt durch die Einladungsobjektverwaltungseinrichtung;
c1) Anzeigen der Einladungsübersicht seitens einer Anzeigeeinrichtung des Endgerätes zumindest bei nutzerseitiger Betätigung einer Eingabeeinrichtung des Endgerätes als Aktivierungsauswahl auf die Erinnerung gemeinsam mit wenigstens einer Information hinsichtlich des Zustandes und/oder eines möglichen Zustandes des empfangenen Einladungsobjektes;
c2) Erstellen eines Einladungsobjektes durch Änderung des Zustandes und/oder eines möglichen Zustandes des empfangenen Einladungsobjektes durch nutzerseitige Reaktion auf das empfangene Einladungsobjekt zumindest bei nutzerseitiger Betätigung einer Eingabeeinrichtung des Endgerätes durch die Einladungsobjektverwaltungseinrichtung und
d1) Senden des erstellten Einladungsobjektes an wenigstens einen Einladungsempfänger mittels einer Sendeeinheit des Endgerätes durch die Einladungsobjektverwaltungseinrichtung.

Eine weitere Ausgestaltung der Erfindung ist gekennzeichnet durch das Speichern einer Kopie des Einladungsobjektes in einer Speichereinheit für empfangende Einladungsobjekte des Endgerätes, vorzugsweise durch die Einladungsobjektverwaltungseinrichtung. Durch das Speichern einer Kopie des Einladungsobjektes in einer Speichereinheit für empfangende Einladungsobjekte des Endgerätes ist so eine spätere Nutzung empfangender Einladungsobjekte, beispielsweise zum Erstellen von neuen Einladungsobjekten, zur Dokumentation einer Korrespondenz bezüglich eines Einladungsobjektes und/oder dergleichen Aktionen ermöglicht. Eine vorteilhafte Ausgestaltung der Erfindung sieht das Speichern der erzeugten Einladungsübersicht als Einladungsobjekt in der Speichereinheit durch die Einladungsobjektverwaltungseinrichtung vor. Eine weitere Ausgestaltung der Erfindung ist gekennzeichnet durch das Speichern des gesendeten Einladungsobjektes in der Speichereinheit und/oder in einer Speichereinheit für gesendete Einladungsobjekte, vorzugsweise durch die Einladungsobjektverwaltungseinrichtung.

In einer weiteren vorteilhaften Ausgestaltung der Erfindung wird Verfahrensschritt b1) mit oder vor Verfahrensschritt b2) ausgeführt.

Ein weiteres erfindungsgemäßes Verfahren zur Verwaltung von Einladungen mit in Telekommunikationsnetzen betreibbaren Endgeräten, vorzugsweise mit in Mobilfunknetzen betreibbaren mobilen Endgeräten, ist dadurch gekennzeichnet, dass seitens eines Endgerätes wenigstens eine Information über einen Einladungssender, wenigstens eine Information über wenigstens einen Einladungsempfänger und wenigstens einen Einladungsvorschlag mit wenigstens einer Information hinsichtlich Zeit, Ort, Zweck, Inhalt und/oder Zustand des Einladungsvorschlags aufweisendes Einladungsobjekt erstellt wird, wobei das Einladungsobjekt für jede Information jeweils ein Feld zur Aufnahme der Informationen des Einladungsobjektes aufweist. Bei entsprechend erfindungsgemäßer Ausgestaltung eines Einladungsobjektes wird so die Verwaltung von Einladungen weiter vereinfacht, insbesondere hinsichtlich eines individualisierten Einladungsmanagements, da Einladungsempfänger als Einladungsbeteiligte besonders einfach und insbesondere ohne aufwändige Betätigungseingaben auf Einladungsvorschläge in Einladungsobjekten reagieren können.

Vorteilhafterweise erfolgt die Erstellung und/oder die Modifikation eines Einladungsobjektes seitens des Endgerätes unter Nutzung einer interaktiven Schnittstelle des Endgerätes, vorzugsweise einer Schnittstelle mit graphischer Benutzeroberfläche, einer sogenannten GUI (GUI: Graphical User Interface).

Eine weitere Ausgestaltung der Erfindung ist gekennzeichnet durch eine im Rahmen der Erstellung und/oder der Modifikation eines Einladungsobjektes erfolgende Veränderung eines Einladungsobjektes. Vorteilhafterweise wird im Rahmen der Veränderung eines Einladungsobjektes wenigstens ein Einladungsvorschlag aus dem Einladungsobjekt entfernt oder wenigstens ein Einladungsvorschlag dem Einladungsobjekt hinzugefügt. Erfindungsgemäß wird so im Rahmen der Veränderung jeweils ein neues Einladungsobjekt erstellt, so dass Einladungsbeteiligte im Rahmen der Reaktion auf Einladungen praktisch ein neues Einladungsobjekt erstellen, welches Zustände und/oder Reaktionen oder dergleichen Veränderungen anderer Einladungsbeteiligter, also Einladungssender und/oder Einladungsempfänger, umfasst beziehungsweise beinhaltet.

Vorteilhafterweise wird im Rahmen der Veränderung eines Einladungsobjektes wenigstens ein Einladungsvorschlag hinsichtlich Zeit, Ort, Zweck, und/oder Inhalt verändert.

Gemäß einer weiteren vorteilhaften Ausgestaltung der Erfindung werden im Rahmen der Erstellung und/oder der Modifikation eines Einladungsobjektes für die Erstellung genutzte Informationen seitens des Endgerätes erfasst und im Rahmen einer später erfolgenden Erstellung und/der Modifikation eines weiteren Einladungsobjektes und/oder Veränderung eines Einladungsobjektes zur weitergehenden Nutzung bereitgehalten und/oder angeboten. Informationen umfassen dabei vorteilhafterweise zumindest Informationen über Einladungsempfänger und/oder Einladungsorte.

Bis zu einem weiterem Vorschlag der Erfindung werden zuletzt genutzte Informationen seitens der interaktiven Schnittstelle des Endgerätes in einer Liste zur weitergehenden Nutzung angeboten, vorzugsweise in einer vorgebbaren Anzahl an Informationen.

Eine weitere Ausgestaltung der Erfindung sieht vor, dass häufig genutzte Informationen automatisch zur weitergehenden Nutzung angeboten werden, vorzugsweise in einer vorgebbaren Anzahl an Informationen. Durch die Nutzungen der Informationen als auch die Vorgebbarkeit hinsichtlich der Anzahl derselben ist eine weitere Steigerung hinsichtlich der Anwendungsmöglichkeiten als auch der Individualisierung für den Nutzer gegeben.

Vorteilhafterweise umfasst die wenigstens eine Information über einen Einladungssender und/oder die wenigstens eine Information über wenigstens einen Einladungsempfänger die dem Einladungssender oder Einladungsempfänger im Telekommunikationsnetz eindeutig zugeordnete Rufnummer, insbesondere die sogenannte MSISDN (MSISDN: Mobile Subscriber ISDN; ISDN: Integrated Services Digital Network) und/oder dergleichen eindeutige Kennung des Telekommunikationsnetzes.

In einer weiteren vorteilhaften Ausgestaltung der Erfindung wird ein Einladungsobjekt von einem Endgerät eines Einladungssenders über das Telekommunikationsnetz an ein Endgerät wenigstens eines Einladungsempfängers gesendet. Vorteilhafterweise ist für die Sendung des Einladungsobjektes die Nutzung wenigstens eines Nachrichtendienstes des Telekommunikationsnetzes, vorzugsweise SMS, MMS, E-Mail oder Instant Messaging als Nachrichtendienst des Telekommunikationsnetzes, vorgesehen. Vorteilhafterweise wird ein Einladungsobjekt von einem Endgerät wenigstens eines Einladungsempfängers über das Telekommunikationsnetz empfangen.

Vorteilhafterweise reagiert der wenigstens eine Einladungsempfänger auf wenigstens ein empfangenes Einladungsobjekt durch wenigstens eine Abstimmung.

Eine weitere vorteilhafte Ausgestaltung der Erfindung ist gekennzeichnet durch eine durch Sendung eines zumindest hinsichtlich der Zustandsinformation des Einladungsvorschlags des Einladungsobjektes veränderten Einladungsobjektes an das Endgerät des ursprünglichen Einladungssenders und bei Vorhandensein an das Endgerät wenigstens eines weiteren Einladungsempfängers über das Telekommunikationsnetz erfolgende Abstimmung.

Eine weitere erfindungsgemäße Ausgestaltung ist gekennzeichnet durch Informationen des Zustandes eines Einladungsvorschlags hinsichtlich "nichts", "bestätigt", "eventuell", "abgelehnt", "gewählt" und/oder "geändert".

Die Informationen des Zustandes eines Einladungsvorschlags ermöglichen so den Nutzern eine weiter vereinfachte und dennoch umfangreiche Abstimmung, ohne das aufwändige Betätigungseingaben seitens einer Eingabeeinrichtung des Endgerätes erforderlich werden, insbesondere im Zusammenhang mit der Nutzung einer erfindungsgemäßen interaktiven Schnittstelle des Endgerätes.

Eine weitere Ausgestaltung der Erfindung ist gekennzeichnet durch eine automatisch erfolgende Veränderung der Zustandsinformation wenigstens eines Einladungsvorschlags eines Einladungsobjektes durch Sendung und/oder Empfang des Einladungsobjektes über das Telekommunikationsnetz seitens des Endgerätes des Einladungssenders und/oder seitens des Endgerätes des wenigstens einen Einladungsempfängers. Erfindungsgemäß wird so eine Zustandsänderung eines Einladungsvorschlags eines Einladungsobjektes bereits durch das Senden beziehungsweise dem Empfang seitens der jeweiligen Einladungsbeteiligten bewirkt. Hierdurch wird insbesondere das Einladungsmanagement weiter vereinfacht.

Eine weitere vorteilhafte Ausgestaltung der Erfindung ist gekennzeichnet durch wenigstens eine automatische Berücksichtigung von zeitlichen, örtlichen und/oder in der Person des Einladungssenders und/oder wenigstens eines Einladungsempfängers begründeten Ereignissen seitens des wenigstens einen Einladungsvorschlags eines Einladungsobjektes. Erfindungsgemäß können so automatisch in der Person des Einladungssenders und/oder des Einladungsempfängers begründete Ereignisse, beispielsweise Besprechungstermine, Arzttermine, Urlaubszeit oder dergleichen berücksichtigt werden. Entsprechende in der Person des Einladungssenders beziehungsweise Einladungsempfängers begründete Ereignisse werden vorteilhafterweise aus einer entsprechenden seitens des Endgerätes von der jeweiligen Person vorgesehen Terminplaner- und/oder Kalendereinrichtung abgefragt und/oder mit dieser erfasst.

Eine weitere vorteilhafte Ausgestaltung der Erfindung ist gekennzeichnet durch eine automatische Erinnerung an Einladungsobjekte in Abhängigkeit von vorzugsweise einstellbaren und/oder vorgebbaren zeitlichen Ereignissen, vorzugsweise durch das Endgerät beziehungsweise durch entsprechende seitens des Endgerätes vorgesehene und/oder ausgeführte Einrichtungen, insbesondere Terminplaner- und/oder Kalendereinrichtungen oder dergleichen Anwendungen.

In einer besonders vorteilhaften Ausgestaltung der Erfindung werden Einladungsobjekte seitens einer Anzeigeeinrichtung des Endgerätes in einer Übersicht wiedergegeben, vorzugsweise sortiert nach zeitlichen, örtlichen, in der Person des Einladungssenders und/oder wenigstens eines Einladungsempfängers begründeten Ereignissen und/oder der Zustandsinformation des wenigstens einen Einladungsvorschlags eines Einladungsobjektes.

Zur Lösung der eingangs genannten Aufgabe wird mit der vorliegenden Erfindung ferner ein Endgerät zum Betrieb in Telekommunikationsnetzen, vorzugsweise zum Betrieb in Mobilfunknetzen, insbesondere gemäß einem GSM-, GPRS- und/oder UMTS- Funknetzstandard, vorgeschlagen, welches durch eine Einrichtung zum Empfangen eines Einladungsobjektes, einer Einrichtung zur Erstellung eines Einladungsobjektes durch Kumulieren des empfangenden Einladungsobjektes mit einem seitens des Endgerätes vorliegenden Einladungsobjekt, einer Einrichtung zum Anzeigen eines Einladungsobjektes, vorzugsweise des erstellten Einladungsobjektes und einer Einrichtung zum Senden eines Einladungsobjektes, vorzugsweise des erstellten Einladungsobjektes an Einladungsbeteiligte gekennzeichnet ist.

In einer weiteren Ausgestaltung der Erfindung weist das Endgerät ferner eine Einrichtung zur Modifikation eines Einladungsobjektes, vorzugsweise des erstellten Einladungsobjektes, auf.

In einer weiteren vorteilhaften Ausgestaltung der Erfindung weist das Endgerät eine Einrichtung zur Erstellung von Einladungsobjekten, wenigstens eine Einrichtung zur Speicherung von Einladungsobjekten, eine Einrichtung zur Versendung von Einladungsobjekten über das Telekommunikationsnetz, eine Einrichtung zum Empfang von Einladungsobjekten über das Telekommunikationsnetz und/oder eine Einrichtung zur Verwaltung der Erstellung, der Speicherung der Versendung und/oder des Empfangs von Einladungsobjekten auf, wobei ein Einladungsobjekt vorteilhafterweise wenigstens eine Information über einen Einladungssender, wenigstens eine Information über wenigstens einen Einladungsempfänger und wenigstens einen Einladungsvorschlag mit wenigstens einer Information hinsichtlich Zeit, Ort, Zweck, Inhalt und/oder Zustand des Einladungsobjekts aufweist.

In einer weiteren vorteilhaften Ausgestaltung der Erfindung weist die Einrichtung zur Erstellung und/oder zur Modifikation von Einladungsobjekten wenigstens eine interaktive Schnittstelle zur Erfassung von Dokumenten auf. Die interaktive Schnittstelle des Endgerätes ist dabei vorteilhafterweise als graphische Benutzerschnittstelle, sogenannte GUI, ausgebildet.

Vorteilhafterweise weist die Einrichtung zur Erstellung und/oder zur Modifikation von Einladungsobjekten wenigstens eine Schnittstelle auf, welche einen Zugriff auf wenigstens einen Teil einer Datenbank und/oder wenigstens eine Nutzung wenigstens eines Teils eines Anwendungsprogramms und/oder einer Funktionalität des Endgerätes ermöglicht, besonders bevorzugt hinsichtlich von Terminplaner- und/oder Kalenderfunktionalitäten. Entsprechende Funktionalitäten können dabei seitens des Endgerätes selbst implementiert sein oder aber seitens des Telekommunikationsnetzes implementiert sein, wobei das Endgerät entsprechende Funktionalitäten über das Telekommunikationsnetz nutzen kann.

Vorteilhafterweise weist das Endgerät wenigstens eine Einrichtung zur Speicherung von Einladungsobjekten auf.

Das erfindungsgemäße Endgerät ist vorteilhafterweise ausgebildet und/oder eingerichtet, ein erfindungsgemäßes Verfahren zumindest teilweise auszuführen.

Weitere Einzelheiten, Merkmale und Vorteile der Erfindung werden nachfolgend anhand der in den Figuren der Zeichnung dargestellten Ausführungsbeispiele näher erläutert. Dabei zeigen:
- Fig. 1: in einer schematischen Prinzipdarstellung ein Ausführungsbeispiel einer erfindungsgemäßen Einladungsverwaltung seitens eines in einem Mobilfunknetz betreibbaren mobilen Endgerätes und
- Fig. 2: in einer schematischen Prinzipdarstellung ein weiteres Ausführungsbeispiel einer erfindungsgemäßen Einladungsverwaltung seitens eines in einem Mobilfunknetz betreibbaren mobilen Endgerätes.

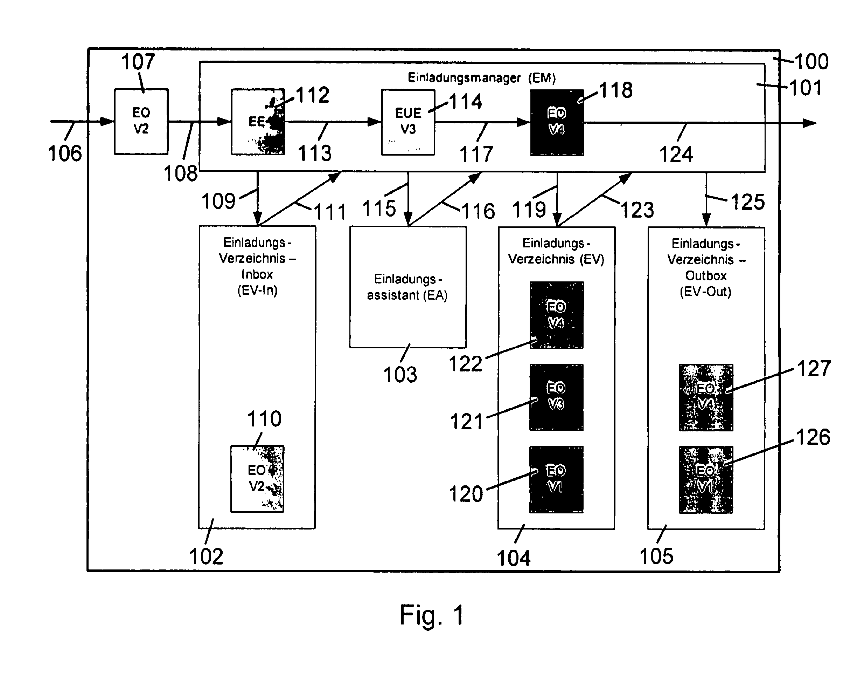

Fig. 1 zeigt ein in einem Mobilfunknetz betreibbares mobiles Endgerät 100, welches zur Verwaltung von Einladungen ausgebildet ist. Eine Einladung wird dabei von einem Einladungsobjekt gebildet, welches wenigstens eine Information über einen Einladungssender, wenigstens eine Information über wenigstens einen Einladungsempfänger und wenigstens einen Einladungsvorschlag mit wenigstens einer Information hinsichtlich Zeit, Ort, Zweck, Inhalt und/oder Zustand des Einladungsvorschlags aufweist. Seitens des Einladungsobjektes ist dabei für jede Information jeweils ein Feld zur Aufnahme der Informationen des Einladungsobjektes vorgesehen. Zur Verwaltung der Einladungen weist das mobile Endgerät 100, vorliegend ein in einem Mobilfunknetz gemäß einem GSM-, GPRS- und/oder UMTS-Funknetzstandard betreibbares Mobilfunktelefon 100, eine Einladungsobjektsverwaltungseinrichtung (Einladungsmanager (EM)) 101, eine Einrichtung (Einladungsverzeichnis-Inbox (EV-In)) 102 zur Speicherung von seitens des Mobilfunktelefons 100 eingehenden Einladungsobjekten (EO), einer Einrichtung (Einladungsassistant (EA)) 103 zur Spezifizierung und/oder Veränderung von Einladungsobjekten (EO), einer Einrichtung (Einladungsverzeichnis (EV)) 104 zur Speicherung von Einladungsobjekten (EO) und einer Einrichtung (Einladungsverzeichnis-Outbox (EV-Out)) 105 zur Speicherung von dem Mobilfunktelefon 100 gesendeten Einladungsobjekten (EO). Darüber hinaus weist das Mobilfunktelefon 100 eine in Fig. 1 nicht explizit dargestellte Einrichtung zum Empfangen von Einladungsobjekten über das Mobilfunknetz und eine ebenfalls in Fig. 1 nicht explizit dargestellte Einrichtung zum Senden von Einladungsobjekten über das Mobilfunknetz auf.

Bei dem in Fig. 1 dargestellten Ausführungsbeispiel wurde mit dem Mobilfunktelefon 100 bereits ein Einladungsobjekt (EO V1) erstellt und versendet. Dementsprechend befindet sich das erstellte und versendete Einladungsobjekt (EO V1) zum einen im Einladungsverzeichnis (EV) 104, in Fig. 1 mit Bezugszeichen 120 gekennzeichnet, als auch im Einladungsverzeichnis-Outbox (EV-Out) 105, in Fig. 1 mit Bezugszeichen 126 gekennzeichnet. Auf das ursprünglich versendete Einladungsobjekt EO V1 empfängt das Mobilfunktelefon 100 über das Mobilfunknetz eine Antwort in Form eines Einladungsobjektes EO V2. Der Empfang des Einladungsobjektes EO V2 ist in Fig. 1 durch das Bezugszeichen 106 gekennzeichnet. Das Einladungsobjekt EO V2 wird dabei von einer Empfangseinheit des Mobilfunktelefons 100 empfangen. Die Empfangseinheit übergibt das empfangende Einladungsobjekt (EO V2) 107 an den Einladungsmanager (EM) 101. Die Übergabe des Einladungsobjektes (EO V2) 107 ist in Fig. 1 durch den mit 108 gekennzeichneten Pfeil dargestellt.

Der Einladungsmanager (EM) 101 speichert eine Kopie des Einladungsobjektes (EO V2) im Einladungsverzeichnis-Inbox (EV-In) 102. Die Speicherung ist in Fig. 1 durch den mit 109 gekennzeichneten Pfeil dargestellt. Die gespeicherte Kopie des Einladungsobjektes EO V2 ist in Fig. 1 mit dem Bezugszeichen 110 gekennzeichnet. Dies geschieht unter Nutzung 111 des Einladungsassistanten (EA) 103, in Fig. 1 symbolisch durch den mit 111 gekennzeichneten Pfeil dargestellt. Danach löst der Einladungsmanager (EM) 101 eine Einladungserinnerung (EE) aus und bringt diese zur Anzeige. Die Auslösung der Einladungserinnerung (EE) ist in Fig. 1 mit dem Bezugszeichen 112, das Anzeigen derselben durch das Bezugszeichen 113 gekennzeichnet. Die Einladungserinnerung wird dabei seitens einer Anzeigeeinrichtung des Mobilfunktelefons 100 wiedergegeben und erinnert den Nutzer des Mobilfunktelefons 100 an eine Einladung.

Der Nutzer des Mobilfunktelefons 100 kann sich über die Einladungserinnerung (EE) die Einladungsübersicht (EUE) seitens der Anzeigeeinrichtung des Mobilfunktelefons 100 anzeigen lassen. Die Einladungsübersicht (EUE) umfasst dabei neben der Darstellung eines empfangenden Einladungsobjektes gleichzeitig beziehungsweise zusätzlich die Reaktionen der Einladungsbeteiligten auf das Einladungsobjekt in einer Überblicksbeziehungsweise Übersichtsdarstellung. Im Rahmen der Erzeugung der Einladungsübersicht (EUE) kumuliert der Einladungsmanager (EM) 101 die zuletzt im Einladungsverzeichnis (EV) 104 als Einladungsobjekt (EO V1) gespeicherte Einladung 120 mit dem zuletzt empfangenden Einladungsobjekt (EO V2) 107 beziehungsweise 110 und erstellt ein neues Einladungsobjekt (EO V3) 114. Eine Kopie des so durch Kumulation erstellten Einladungsobjektes EO V3 speichert der Einladungsmanager (EM) 101 dann im Einladungsverzeichnis (EV) 104. Die Kopie des Einladungsobjektes (EO V3) ist in Fig. 1 mit dem Bezugszeichen 121 gekennzeichnet. Die Speicherung des Einladungsobjektes EO V3 im Einladungsverzeichnis (EV) 104 durch den Einladungsmanager (EM) 101 ist in Fig. 1 durch den mit dem Bezugszeichen 119 gekennzeichneten Pfeil dargestellt. Der Nutzer des Mobilfunktelefons 100 hat daraufhin die Möglichkeit, auf die Einladungsübersicht (EUE) 114 zu reagieren. Dazu stehen zwei Wege zur Verfügung. Zum einen kann der Nutzer eine angebotene Option zur Reaktion auf das Einladungsobjekt auswählen, vorliegend "zugestimmt", "abgelehnt", "vielleicht" und/oder "gewählt" auswählen und ein neues Einladungsobjekt als Einladungsvorschlag erstellen. Dies geschieht unter Nutzung 116 des Einladungsassistanten (EA) 103. Zum anderen kann der Nutzer des Mobilfunktelefons 100 ausgehend von der Einladungsübersicht (EUE) 114 ein völlig neues Einladungsobjekt bestellen. Beide Wege führen entsprechend dem in Fig. 1 mit 117 gekennzeichneten Pfeil zu einem neuen Einladungsobjekt (EO V4) 118, dass der Einladungsmanager im Einladungsverzeichnis-Outbox (EV-Out) entsprechend dem mit Bezugszeichen 125 gekennzeichneten Pfeil speichert und entsprechend dem mit 124 gekennzeichneten Pfeil an die an der Einladung beteiligten Einladungsempfänger sendet.

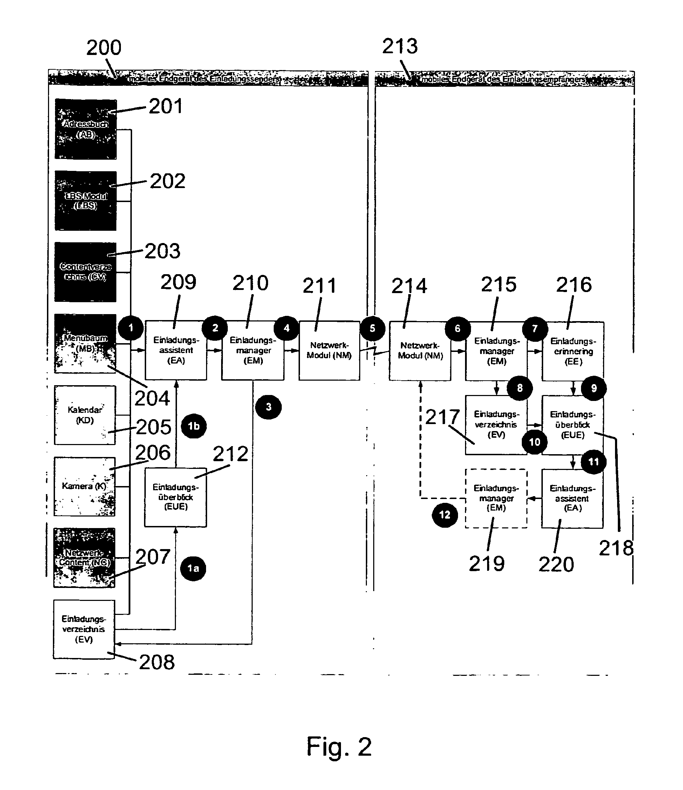

Bei der Darstellung gemäß Fig. 2 weist ein in einem Mobilfunknetz betreibbares mobiles Endgerät 200, vorliegend ein Mobilfunktelefon verschiedene Anwendungen und/oder Einrichtungen 201 bis 208 auf, welche über eine interaktive Schnittstelle des Mobilfunktelefons 200 nutzbar sind. Bei den Anwendungen beziehungsweise Einrichtungen 201 bis 208 handelt es sich beispielhaft um ein mit der interaktiven Schnittstelle des Mobilfunktelefon nutzbares Adressbuch (AB) 201, ein Modul zur Nutzung von standortbezogenen beziehungsweise ortsbezogenen Diensten, sogenannten Location Based Services (LBS), mit einem LBS Modul (LBS) 202, einem Inhaltsverzeichnis beziehungsweise Contentverzeichnis (CV) 203, einem Menübaum (MB) 204, Kalender (KD) 205, einer Kamera (K) 206, einer Einrichtung mit Inhalten des jeweils genutzten Mobilfunknetzwerks, einem sogenannten Netzwerk-Content (NC) 207, als auch einer Anwendung 208, vorliegend einem erfindungsgemäßen Einladungsverzeichnis (EV) 208. In Verfahrensschritt 1 wird über die interaktive Schnittstelle des Mobilfunktelefons 200 der Einladungsassistent (EA) 209, gestartet. Der Einladungsassistent (EA) 209 ist dabei von unterschiedlichen Anwendungen 201 bis 208 des Mobilfunktelefons 200 startbar.

In Verfahrensschritt 1 a wird als Alternative beispielsweise ein gespeichertes Einladungsobjekt (EO) im Einladungsverzeichnis (EV) 208 ausgewählt und geöffnet. Das geöffnete Einladungsobjekt (EO) wird dabei mit der Einladungsübersicht beziehungsweise dem Einladungsüberblick (EUE) 212 angezeigt. Wenn der Nutzer des Mobilfunktelefons 200 sich entscheidet, dass Einladungsobjekt (EO) zu editieren oder sonst wie zu verändern beziehungsweise zu modifizieren, wird es an den Einladungsassistenten (EA) 209 übergeben (Verfahrensschritt 1 b).

In dem mit 2 gekennzeichneten Verfahrensschritt übergibt der Einladungsassistent (EA) 209 ein Einladungsobjekt (EO) an den Einladungsmanager (EN) 210.

In Verfahrensschritt 3 speichert der Einladungsmanager (EM) 210 das Einladungsobjekt (EO) in dem Einladungsverzeichnis (EV) 208.

In Verfahrensschritt 4 übergibt der Einladungsmanager (EM) 210 das Einladungsobjekt (EO) an das Netzwerkmodul (NM) 211 des Mobilfunktelefons 200.

In Verfahrensschritt 5 übergibt das Netwerkmodul (NM) 211 des Mobilfunktelefons 200 das Einladungsobjekt (EO) an das Übertragungsnetz, vorliegend das Mobilfunknetz gemäß einem Protokoll nach dem GSM-, UMTS-, CDMA-, WiFi-Standard oder dergleichen Standard eines Mobilfunknetzwerks. Das Übertragungsnetz übergibt das Einladungsobjekt (EO) dann an das Netwerkmodul (NM) 214 eines in dem Mobilfunknetz betreibbaren mobilen Endgerätes 213, vorliegend ein Mobilfunktelefon, eines Einladungsempfängers.

Das Netwerkmodul (NM) 214 des Mobilfunktelefons 213 des Einladungsempfängers übergibt das Einladungsobjekt (EO) dann in Verfahrensschritt 6 an den Einladungsmanager (EM) 215 des Mobilfunktelefons 213.

In Verfahrensschritt 7 trägt der Einladungsmanager (EM) 215 eine Einladungserinnerung (EE) 216, die seitens einer Anzeigeeinrichtung des Mobilfunktelefons 213 in Verfahrensschritt 7 angezeigt wird. In Verfahrensschritt 8 speichert der Einladungsmanager (EM) 215 das Einladungsobjekt in einem Einladungsverzeichnis (EV) 217.

In Verfahrensschritt 9 entscheidet der Benutzer des Mobilfunktelefons 213 sich das Einladungsobjekt EO anzusehen. Eine entsprechende Anzeige erhält er entsprechend Verfahrensschritt 9 in dem Einladungsüberblick (EUE) 218 angezeigt.

Alternativ kann der Benutzer sich in Verfahrensschritt 10 das Einladungsobjekt (EO) auch im Einladungsverzeichnis (EV) 217 auswählen und in dem Einladungsüberblick (EUE) 218 anzeigen lassen.

In Verfahrensschritt 11 kann der Benutzer des Mobilfunktelefons 213 auf das Einladungsobjekt (EO) reagieren. Hierbei wird das Einladungsobjekt (EO) im Einladungsassistenten (EA) 220 angezeigt. Im Einladungsassistenten (EA) 220 kann der Benutzer des Mobilfunktelefons 213 das Einladungsobjekt (EO) dann durch Bearbeitung verändern beziehungsweise modifizieren.

Nach entsprechender Bearbeitung des Einladungsobjektes (EO) kann der Benutzer des Mobilfunktelefons 213 nach Abschluss und Bestätigung seiner Bearbeitung das Einladungsobjekt wieder an den Einladungsmanager (EM) 219 übergeben. Der Einladungsmanager (EM) 219 entspricht dabei dem Einladungsmanager (EM) 215 des Mobilfunktelefons 213, ist in Fig. 2 nur zur Verdeutlichung der Verfahrensweise gestrichelt und mit dem Bezugszeichen 219 versehen dargestellt. Der Einladungsmanager (EM) 219 übergibt das bearbeitete Einladungsobjekt (EO) dann an das Netzwerkmodul (NM) (Verfahrensschritt 12) so dass es dann an das Übertragungsnetz weitergeleitet und beispielsweise an den Einladungssender, vorliegend das Mobilfunktelefon 200 weitergeleitet werden kann.

Nachfolgend werden ergänzend und/oder erläuternd zu den Ausführungsbeispielen gemäß Fig. 1 und Fig. 2 weitere Einzelheiten und Funktionsweisen von Einrichtungen der erfindungsgemäßen mobilen Endgeräte 100, 200 und 213 und mögliche Anwendungsbeispiele näher erläutert:

Zur weitergehenden Erläuterung werden zunächst die im Zusammenhang mit der vorliegenden Erfindung und deren Elementen genutzten Begrifflichkeiten näher definiert und erläutert:
- Ablehnung: Mögliche Reaktion eines Einladungsempfängers auf eine empfangene Einladung, in dem er zum Ausdruck bringt, dass er die Einladung nicht annimmt.
- Abstimmung: Mögliche Reaktion eines Einladungsempfängers auf eine empfangene Einladung mit mehreren Einladungsoptionen, in dem er zum Ausdruck bringt, welche Einladungsoption bevorzugt wird.
- Einladungsassistent (EA): Modul, mit dem ein neues Einladungsobjekt spezifiziert werden kann oder ein existierendes Einladungsobjekt verändert werden kann.
- Einladungsempfänger: Person, die eine Einladung auf ihrem Endgerät (Mobilfunktelefon) erhält.
- Einladungssender: Person, die eine Einladung erstellt und an einen oder mehrere Empfänger versendet.
- Einladungserinnerung (EE): Anzeige auf einem Endgerät (Mobilfunktelefon), in dem Einladungsempfänger an eine Einladung erinnert werden.
- Einladungsmanager (EM): Modul, das Einladungsobjekte verwaltet.
- Einladungsobjekt (EO): Objekt auf einem Endgerät (Mobilfunktelefon), in dem eine Einladung mit einem oder mehreren Einladungsvorschlägen spezifiziert ist. Das Einladungsobjekt kann unter anderem erstellt, versendet, empfangen, angezeigt, verändert, organisiert und/oder gelöscht werden.
- Einladungssicht: Sicht auf Einladungsobjekte nach verschiedenen Kriterien, beispielsweise zeitbasiert, personenbasiert, ortsbasiert oder dergleichen.
- Einladungsüberblick (EUE): Darstellung eines empfangenen Einladungsobjekts, bei dem die Reaktionen auf das Einladungsobjekt im Überblick dargestellt werden können.
- Einladungsverzeichnis (EV): Bereich auf dem Endgerät (Mobilfunktelefon), in dem Einladungsobjekte gespeichert werden.
- Einladungsverzeichnis Inbox (EV-In): - Bereich auf dem Endgerät (Mobilfunktelefon), in dem empfangene Einladungsobjekte gespeichert werden.
- Einladungsverzeichnis Outbox (EV-Out): - Bereich auf dem Endgerät (Mobilfunktelefon), in dem versendete Einladungsobjekte gespeichert werden.
- Einladungsvorschlag: Spezifikation einer Einladung mit Angaben zum Ort, Zeit, Zweck, einer Liste von Adressen und/oder freiem Text. Ein Einladungsobjekt kann dabei eine oder mehrere Einladungsvorschläge enthalten.
- Eventuell: Mögliche Reaktion eines Einladungsempfängers auf eine empfangene Einladung, in dem er zum Ausdruck bringt, dass er nicht sicher ist, ob er eine Einladung wahrnehmen kann.

Nachfolgend folgen Beispiele für den Aufbau und die Funktionsweise der Elemente der Erfindung:
1 Einladungsobjekt (EO)
   Das Einladungsobjekt enthält die folgenden Felder:
   - Für das gesamte Einladungsobjekt
      o Einladungsobjekt ID (EO.11)
      o Zeitstempel des Erstellens (EO.14)
      o Absender (EO.1): enthält MSISDN des Einladungssenders oder den Namen aus dem Adressbuch
      o Liste der Einladungsempfänger (EO.2): enthält Rufnummer (MSISDN) oder den assoziierten Namen aus dem Adressbuch, kann alternativ auch ein anderes Adressformat enthalten (z.B. Email-Adresse)
      o Priorität (EO.3): Hoch, mittel, gering (feste Werte)
      o Kategorien (EO.4): kann vom Benutzer festgelegt werden
      o Einen oder mehrere Einladungsvorschläge (EO.5)
   - Für jeden Einladungsvorschlag:
      o Einladungsvorschlag ID (EO.12)
      o Absender des Einladungsvorschlags (EO.13): enthält Rufnummer (MSISDN) des Absenders
      o Zeit-Felder (EO.6): Datum Start (EO.6.1), Uhrzeit Start (EO.6.2), Datum Ende (EO.6.3), Uhrzeit Ende (EO.6.4) und Zeitzone (EO.6.5), Ganzer Tag (ja/nein) (EO.6.6)
      o Orts-Felder (EO.7): Name (EO.7.1), Strasse (EO.7.2), Hausnummer (EO.7.3), Postleitzahl (EO.7.4), Ort (EO.7.5), Region (EO.7.6) und Staat (EO.7.7), Ortspezifische Information (z.B. Längengrad, Breitengrad) (EO.7.8)
      o Zweck (EO.8): Textfeld
      o Inhaltsfeld (EO.9): ist ein freies Feld, in das Text, Bilder, Töne, Videos etc. eingegeben werden können.
      o Liste von Empfängern und/oder Zuständen (EO.10); die Zustände können die folgenden Werte annehmen: nichts (EO.10.1), bestätigt (EO.10.2), eventuell (EO.10.3), abgelehnt (EO.10.4), gewählt (EO.10.5)
2 Einladungsassistent (EA)
   Der Einladungsassistent ermöglicht es, dass Benutzer eine Einladung spezifizieren können. Der Einladungsassistent bietet dabei im Wesentlichen zwei Schritte an:
   Schritt 1: Spezifikation der Einladung mit einem Einladungsvorschlag (EO.1 - EO.10). Schritt 2: Sollen weitere Einladungsvorschläge erstellt werden, bietet der Einladungsassistent die Möglichkeit, diese zu spezifizieren.

   Der Einladungsassistent bietet für die folgenden Feldern zusätzliche Möglichkeiten an:
   - Für EO.2: Liste der zuletzt genutzten Einladungsempfänger
   - Für EO.7: Liste der zuletzt genutzten Orts-Informationen, zugänglich über Name
   - Für EO.7: Liste von häufig genutzten Orten (EO.7.2 - EO.7.7 werden automatisch gefüllt)
   - Für EO.9: Zugang zu anderen Bereichen des Mobil-Telefons, wie z.B. Bild-Galerie, Nachrichten-Verzeichnisse etc.
3 Einladungserinnerung (EE)

### Aufbau

Die Einladungserinnerung ist eine Meldung auf dem Endgerät (Mobilfunktelefon) des Einladungsempfängers, die mitteilt, dass eine Einladung empfangen wurde. Die Einladungserinnerung enthält die folgenden Felder:
- Absender (EE.1, erhält Inhalt von EO.1)
- Zweck (EE.2, erhält Inhalt von EO.8)
- Text (EE.3), z.B. "Sie haben eine Einladung enthalten"
- Option 1: Ansehen (EE.4)
- Option 2: Später ansehen (EE.5)
- Option 3: Schließen (EE.6)

### Funktionsweise

Nach dem Erhalt eines Einladungsobjekts auf einem Endgerät (Mobilfunktelefon) wird das Einladungsobjekt (EO) in einem Einladungsverzeichnis (EV) gespeichert. Eine Einladungserinnerung (EE) wird angezeigt, die den Benutzer auf den Erhalt einer Einladung hinweist.

Die Einladungserinnerung zeigt an, wer die Einladung versendet hat (EE.1), was der Zweck der Einladung ist (EE.2) und ein genereller Text (EE.3), der darauf hinweist, dass es sich um eine Einladung und beispielsweise nicht um eine Nachricht handelt.

Der Benutzer hat die Möglichkeit mit drei Optionen auf die Einladungserinnerung zu reagieren. Er kann "Ansehen" (EE.4) auswählen, wonach die Einladungsübersicht (EUE) angezeigt wird. Der Benutzer kann "Später ansehen" (EE.5) auswählen, was zur Folge hat, dass die Einladungserinnerung nach einem definierten Zeitraum erneut angezeigt wird. Der Benutzer kann die Option "Schließen" (EE.6) auswählen, was zur Folge hat, dass die Einladungserinnerung verschwindet, und das derjenige Zustand vom Endgerät (Mobilfunktelefon) angezeigt wird, bevor die Einladungserinnerung angezeigt wurde.

### 4 Einladungsmanager (EM)

Der Einladungsmanager hat die Aufgabe, Einladungsobjekte auf dem mobilen Telefon zwischen verschiedenen Anwendungen zu bewegen. Der Einladungsmanager übergibt beispielsweise ein Einladungsobjekt von und zum Netzwerkmodul und speichert erstellte oder empfangene Einladungsobjekte in Einladungsverzeichnissen. Außerdem löst der Einladungsmanager eine Einladungserinnerung aus, wenn ein Einladungsobjekt auf einem Endgerät (Mobilfunktelefon) eingetroffen ist. Zudem übernimmt der Einladungsmanager die Kern-Aufgabe, Reaktionen auf empfangene Einladungen mit bestehenden Einladungen zusammenzuführen und das gesamte Abstimmungsergebnis anzuzeigen.

Eine Alternative Ausgestaltung der Erfindung sieht vor, dass der Einladungsmanager in den Einladungsassistenten eingebaut ist.

### 5 Einladungserinnerung (EE) (bei schon erhaltenem Einladungsobjekt als Reaktion auf dieses)

### Aufbau

Eine Einladungserinnerung zeigt an, dass eine Einladung empfangen wurde. Die Einladungserinnerung enthält Felder und Optionen mit den folgenden Werten:
- Absender (EE.1, erhält Inhalt von EO.1)
- Zweck (EE.2, erhält Inhalt von EO.8)
- Text (EE.3), z.B. "Sie haben eine Einladung enthalten"
- Option 1: Einladung ansehen (EE.4)
- Option 2: Übersicht ansehen (EE.5)
- Option 3: Später ansehen (EE.6)
- Option 4: Schließen (EE.7)

### Funktionsweise

Eine Einladungserinnerung zeigt an, dass eine Einladung empfangen wurde.

### 6 Einladungsüberblick (EUE)

### Aufbau

Eine Einladungsübersicht ist die Darstellung einer Einladung, bei der die Reaktionen auf die Einladung von Seiten der Einladungsempfänger im Überblick dargestellt werden. Hierbei werden die verschiedenen Werte der Zustandsfelder (EO.10) aufgelistet mit der Anzahl der Einladungsempfänger, die sich für einen Zustandswert ausgewählt haben.

Enthält ein Einladungsobjekt mehrere Einladungsvorschläge, so wird dieser Überblick für jedes Einladungsobjekt angezeigt, d.h. jedem Einladungsvorschlag wird ein Zustandsfeld EO.10 zugeordnet.

Mit dem Einladungsüberblick erhält der Benutzer die Möglichkeiten, auf eine Einladung zu reagieren. Folgende Optionen sind hierbei möglich:
- Bestätigung (EUE.1)
- Eventuell (EUE.2)
- Ablehnung (EUE.3)
- Ändern (EUE.4)
- Abstimmung (EUE.5)

### Funktionsweise

Hat der Benutzer auf eine Einladung nicht reagiert, ist der Wert des Zustandsfeldes EO.10 auf den Wert "nichts" (EO.10.5) gesetzt.

Der Benutzer hat folgende Möglichkeiten, auf einen Einladungsüberblick zu reagieren.

Wählt der Benutzer die Option Betätigung" (EUE.1) aus, so wird der Wert des Zustand-Feldes EO.10 auf "bestätigt" (EO.10.2) gesetzt.

Wählt der Benutzer die Option "Eventuell" (EUE.2) aus, so wird der Wert des Zustand-Feldes EO.10 auf "eventuell" (EO.10.3) gesetzt.

Wählt der Benutzer die Option abgelehnt" (EUE.3) aus, so wird der Wert des Zustand-Feldes EO.10 auf "abgelehnt" (EO.10.4) gesetzt.

Wählt der Benutzer die Option "Ändern" (EUE.4) aus, so wird die Einladung im Einladungsassistenten geöffnet und der Benutzer kann die Einladung ändern und/oder oder eine Einladungsvorschlag hinzufügen.

Wählt der Benutzer die Option "Abstimmung" (EUE.5) aus, so wird der Wert des Zustand-Feldes EO.10 auf "gewählt" (EO.10.5) gesetzt und die Einladung mit dem Zustandswert an den Einladungssender zurückgeschickt.

Bei allen genannten Möglichkeiten kann der Benutzer optional Inhalte im Inhaltsfeld (EO.9) editieren und damit z.B. erläutern, warum er nicht kann oder warum er einen anderen Einladungsvorschlag sendet.

### 7 Einladungsverzeichnis (EV)

Das Einladungsverzeichnis (EV) ist ein Bereich auf dem Endgerät (Mobilfunktelefon), in dem Einladungsobjekte gespeichert werden. Hierbei handelt es sich um einen Ordner, ähnlich wie ein Nachrichten-Ordner. Eine vorteilhafte Ausgestaltung ist ebenso, die Einladungsobjekte zusammen mit einer Kalender-Anwendung zu speichern oder sie über eine Kalender-Anwendung zugänglich zu machen.. Eine andere vorteilhafte Ausgestaltung ist es, für jedes Einladungsobjekt nur die letzte Version zu speichern und frühere Versionen zu löschen.

### 8 Einladungsverzeichnis - Inbox (EV-In)

Das Einladungsverzeichnis - Inbox (EV-In) ist ein Bereich auf dem mobilen Telefon, in dem empfangene Einladungsobjekte gespeichert werden. Hierbei handelt es sich um einen Ordner, in dem alle empfangenen Einladungsobjekte gespeichert werden. Eine vorteilhafte Ausgestaltung ist es, die empfangenen Einladungsobjekte in dem Eingangsverzeichnis der Nachrichten zu speichern.

### 9 Einladungsverzeichnis - Outbox (EV-Out)

Das Einladungsverzeichnis - Outbox (EV-Out) ist ein Bereich auf dem mobilen Telefon, in dem vom Endgerät (Mobilfunktelefon) versendete Einladungsobjekte gespeichert werden. Hierbei handelt es sich um einen Ordner, in dem alle versendeten Einladungsobjekte gespeichert werden. Eine vorteilhafte Ausgestaltung ist es, die versendeten Einladungsobjekte in dem Ausgangsverzeichnis der Nachrichten zu speichern.

### Nachfolgend werden Anwendungsbeispiele der Erfindung näher erläutert:

1. Ein Einladungsobjekt erstellen/editieren
   1.1 Ein Einladungsobjekt erstellen, initiiert mit leerem Einladungsformular
      Start-Bedingung: Der Benutzer erstellt eine Einladung und beginnt mit einem leeren Einladungsobjekt
      Schritt 1.1.1: Der Benutzer wählt über den Menübaum (MB) den Einladungsassistenten (EA) aus.
      Schritt 1.1.2: Der Einladungsassistent (EA) wird geöffnet und ein leeres Einladungsformular wird angezeigt.
      Schritt 1.1.3: Die folgenden Felder des Einladungsobjekts werden automatisch initiiert:
      EO.11: Dem Einladungsobjekt wird eine ID zugewiesen
      EO.1: Die MSISDN des Einladungssenders wird zugewiesen
      EO.3: Priorität "Mittel" wird zugewiesen
      EO.12: ID für den ersten Einladungsvorschlag wird zugewiesen
      EO.13: die MSISDN des Einladungssenders wird zugewiesen
      Schritt 1.1.4: Der Benutzer gibt Werte für die Felder ein (EO.2 - EO.10). Der Einladungsassistent bietet für die folgenden Feldern zusätzliche Möglichkeiten an:
      - Für EO.2: Der Benutzer hat Zugriff auf eine Liste der zuletzt genutzten Einladungsempfänger
      - Für EO.2: Der Benutzer erhält Zugriff auf das Adressbuch
      - Für EO.7: Der Benutzer erhält Zugriff auf eine Liste der zuletzt genutzten Orts-Informationen;
      - Für EO.7: Der Benutzer erhält Zugriff auf das Adressbuch
      - Für EO.7: Der Benutzer erhält Zugriff auf eine Liste von häufig genutzten Orten (EO.7.2 - EO.7.7 werden automatisch gefüllt)
      - Für EO.9: Der Benutzer erhält Zugriff auf andere Bereiche des Mobil-Telefons, wie z.B. Bild-Galerie, Kamera, Nachrichten-Verzeichnisse etc.
      - Für alle Felder: Jedes Feld kann wahlweise ein- oder ausgeschaltet werden
      Schritt 1.1.5 (optional): Wenn der Benutzer mehrere Einladungsvorschläge versenden möchte, erhält er für die Felder EO.6 - EO.9 ein weiteres Formular. Hier kann er, wie bei Schritt 1.1.3 Werte den Feldern zuordnen.
      Schritt 1.1.6: Nach jeder Speicherung des Einladungsobjekts (EO) wird eine Kopie im Einladungsverzeichnis (EV) gespeichert. Alternative kann dies auch nach jeder Änderung des Einladungsobjekts erfolgen.
      Ergebnis: Ein Einladungsobjekt (EO) ist spezifiziert und im Einladungsverzeichnis gespeichert.
   1.2 Ein Einladungsobjekt erstellen, initiiert mit gespeicherten Inhalten
      Start-Bedingung: Der Benutzer wählt Inhalte (z.B. Bilder, Videos, Text etc.) auf dem Terminal aus.
      Schritt 1.2.1: Mit dem Inhalt ist die Möglichkeit verbunden, den Inhalt in einer Einladung zu benutzen. Der Benutzer aktiviert diese Möglichkeit.
      Schritt 1.2.2: Der Einladungsassistent wird geöffnet und der ausgewählte Inhalt erscheint im Inhaltsfeld EO.9.
      Danach geht es weiter wie mit Schritt 1.1.3.
   1.3 Ein Einladungsobjekt erstellen, initiiert mit aufgenommenen Inhalten
      Start-Bedingung: Der Benutzer wählt ein Aufnahmegerät (z.B. Kamera, Soundrecorder) auf dem Terminal aus.
      Schritt 1.3.1: Mit dem Inhalt ist die Möglichkeit verbunden, den Inhalt in einer Einladung zu benutzen. Der Benutzer aktiviert diese Möglichkeit.
      Schritt 1.3.2: Der Einladungsassistent wird geöffnet und der ausgewählte Inhalt erscheint im Inhaltsfeld EO.9.
      Danach geht es weiter wie mit Schritt 1.1.3.
   1.4 Ein Einladungsobjekt erstellen; initiiert mit ortspezifischer Information
      Start-Bedingung: Der Benutzer wählt eine ortspezifische Information aus, die beispielsweise eine GPS oder LBS-Anwendung zur Verfügung stellt oder aus einem Inhalt (z.B. Bild mit ortspezifischer Information) zur Verfügung gestellt wird.
      Schritt 1.4.1: Mit der Ortsangabe ist die Möglichkeit verbunden, diese in einer Einladung zu benutzen. Der Benutzer aktiviert diese Möglichkeit.
      Schritt 1.4.2: Der Einladungsassistent wird geöffnet und die Ortsangabe wird in die Orts-Felder EO.7 kopiert.
      Danach geht es weiter wie mit Schritt 1.1.3.
   1.5 Ein Einladungsobjekt erstellen, initiiert mit Adresse (aus Adressbuch, Nachricht, Reminder etc.)
      Start-Bedingung: Der Benutzer wählt einen oder mehrere Kontakte im Adressbuch aus.
      Schritt 1.5.1: Mit den Kontakten ist die Möglichkeit verbunden, diese in einer Einladung zu benutzen. Der Benutzer aktiviert diese Möglichkeit.
      Schritt 1.5.2: Der Einladungsassistent wird geöffnet und die Adress-Informationen werden in die Liste der Einladungsempfänger EO.2 kopiert.
      Danach geht es weiter wie mit Schritt 1.1.3.
   1.6 Ein Einladungsobjekt erstellen, initiiert aus einem Kalender
      Start-Bedingung: Der Benutzer wählt ein Zeitintervall (Datum, Uhrzeit start, Uhrzeit Ende) in einem Kalender aus.
      Schritt 1.6.1: Mit dem Zeitintervall ist die Möglichkeit verbunden, diese in einer Einladung zu benutzen. Der Benutzer aktiviert diese Möglichkeit.
      Schritt 1.6.2: Der Einladungsassistent wird geöffnet und die spezifizierte Zeit-Information (Datum, Uhrzeit Start, Uhrzeit Ende) wird in die Zeit-Felder EO.6 kopiert.
      Danach geht es weiter wie mit Schritt 1.1.3.
   1.7 Ein bestehendes Einladungsobjekt bearbeiten
      Start-Bedingung: Eine Einladung ist vorhanden
      Schritt 1.7.1: Der Benutzer wählt eine gespeicherte Einladung im Einladungsverzeichnis (EV) aus und öffnet sie zur Bearbeitung.
      Schritt 1.7.2: Die Einladung wird im Einladungsassistent (EA) mit allen vorhandenen Feldwerten gefüllt.
      Danach geht es weiter wie mit Schritt 1.1.3.
2. Ein Einladungsobjekt versenden
   Start-Bedingung: Ein Einladungsobjekt (EO) ist spezifiziert und im Einladungsverzeichnis gespeichert.
   Schritt 2.1: Der Benutzer bestätigt, das Einladungsobjekt (EO) zu versenden.
   Schritt 2.2: Der Einladungsmanager (EM) speichert die aktuelle Zeit in Feld EO.14 (Zeitstempel des Versendens); das aktualisierte Einladungsobjekt wird auch im Einladungsverzeichnis (EV) gespeichert.
   Schritt 2.3: Der Einladungsmanager speichert eine Kopie des Einladungsobjekts (EO) im Einladungsverzeichnis-Outbox (EV-Out)
   Schritt 2.4: Der Einladungsmanager (EM) übergibt das Einladungsobjekt (EO) an ein Modul, das die Einladung versendet.
   Ergebnis: Das Einladungsobjekt (EO) wurde versendet und im Einladungsverzeichnis-Outbox (EV-Out) gespeichert.
   Alternative/Ergänzung: Der Benutzer kann auswählen, ob die Reaktionen auf eine Einladung an alle Teilnehmer oder nur an den Einladungssender zurückgesendet werden sollen.
3. Ein Einladungsobjekt empfangen
   Start-Bedingung: Ein Einladungsobjekt (EO) wurde von einer Empfangseinheit eines Endgerätes (Mobilfunktelefon) empfangen. Die Empfangseinheit übergibt das Einladungsobjekt an den Einladungsmanager (EM).
   Schritt 3.1: Der Einladungsmanager (EM) speichert das Einladungsobjekt im Einladungsverzeichnis - Inbox (EV-In).
   Schritt 3.2: Der Einladungsmanager (EM) löst eine Einladungserinnerung (EE) aus, die dem Benutzer angezeigt wird.
   Ergebnis: Der Einladungsmanager löst eine Einladungserinnerung (EE) aus.
4. Ein Einladungserinnerung anzeigen
   Start-Bedingung: Der Einladungsmanager löst eine Einladungserinnerung (EE) aus.
   Schritt 4.1: Die Einladungserinnerung zeigt die folgenden Informationen:
   - Absender (EE.1, erhält Inhalt von EO.1)
   - Zweck (EE.2, erhält Inhalt von EO.8)
   - Text (EE.3), z.B. "Sie haben eine Einladung enthalten"
   - Option 1: Einladung ansehen (EE.4)
   - Option 2: Übersicht ansehen (EE.5)
   - Option 3: Später ansehen (EE.6)
   - Option 4: Schließen (EE.7)
   Wenn der Benutzer Option 1 wählt, wird die Einladung mit ihren Detail-Informationen angezeigt. Wählt der Benutzer Option 3, verschwindet die Einladungserinnerung und wird nach einer festgelegten Zeit wieder angezeigt. Wählt der Benutzer die Option 4, verschwindet die Einladungserinnerung.
   Ergebnis: Eine Einladungsübersicht wird anzeigt.
5. Eine neue Version eines Einladungsobjekts erstellen
   Start-Bedingung: Ein Einladungsobjekt wurde empfangen und im Einladungsverzeichnis - Inbox (EV-IN) gespeichert.
   Schritt 5.1: Der Einladungsmanager identifiziert über die Einladungsobjekt ID (EO.11) das gehörige und zuletzt gespeicherte Einladungsobjekt (EO) im Einladungsverzeichnis (EV).
   Schritt 5.2: Der Einladungsmanager erstellt ein neues Einladungsobjekt (EO) und kopiert die Werte der Felder aus dem aktuellsten Einladungsobjekt, das im Einladungsverzeichnis gespeichert ist und die Werte des zuletzt gespeicherten Einladungsobjekts im Einladungsverzeichnis - Inbox (EV-IN) in das neue Einladungsobjekt. Schritt 5.3: Der Einladungsmanager weist dem neu erstellten Einladungsobjekt (EO) die aktuelle Zeit dem Feld EO.14 (Zeitstempel) zu.
   Schritt 5.4: Der Einladungsmanager speichert das neue erstellte Einladungsobjekt (EO) im Einladungsverzeichnis (EV).
   Ergebnis: Ein neues Einladungsobjekt wurde erstellt und wurde im Einladungsverzeichnis (EV) gespeichert.
6. Eine Einladungsübersicht anzeigen
   Start-Bedingung: Ein neues Einladungsobjekt wurde erstellt und wurde im Einladungsverzeichnis (EV) gespeichert. Der Benutzer wählte auf der Einladungserinnerung (EE) die Option 2: Übersicht ansehen (EE.5).
   Schritt 6.1: Der Einladungsmanager initiiert, eine Einladungsübersicht darzustellen, die folgende Werte enthält:
   - Absender (EE.1, erhält Inhalt von EO.1)
   - Zweck (EE.2, erhält Inhalt von EO.8)
   - Für jeden Einladungsvorschlag:
      o Absender des Einladungsvorschlags (EO.13) (optional)
      o Zeit-Felder (EO.6)
      o Orts-Felder (EO.7)
      o MSISDN (oder Name) des Empfängers: Antwort des Empfängers (EO.10)
      o Inhaltsfeld (EO.9) (optional)
      ∘ Antwort Option (EUE.1 - EUE.5):
         □ Bestätigung (EUE.1)
         □ Eventuell (EUE.2)
         □ Ablehnung (EUE.3)
         □ Ändern (EUE.4)
         □ Abstimmung (EUE.5)
      Ergebnis: Eine Einladungsübersicht wird dargestellt.
7. Auf ein Einladungsobjekt antworten
   Start-Bedingung: Eine Einladungsübersicht wird anzeigt.
   Schritt 7.1: Auf Einladung reagieren mit den folgenden Möglichkeiten:
   Schritt 7.1.1: Wählt der Benutzer die Option "Bestätigung" (EUE.1) aus, so wird der Wert des Zustand-Feldes EO.10 auf "betätigt" (EO.10.2) gesetzt.
   Schritt 7.1.2: Wählt der Benutzer die Option "Eventuell" (EUE.2) aus, so wird der Wert des Zustand-Feldes EO.10 auf "eventuell" (EO.10.3) gesetzt.
   Schritt 7.1.3: Wählt der Benutzer die Option "angelehnt" (EUE.3) aus, so wird der Wert des Zustand-Feldes EO.10 auf "abgelehnt" (EO.10.4) gesetzt.
   Schritt 7.1.4: Wählt der Benutzer die Option "Ändern" (EUE.4) aus, so wird die Einladung im Einladungsassistenten geöffnet (weiter mit Szenario 1.7).
   Schritt 7.1.5: Wählt der Benutzer die Option "Abstimmung" (EUE.5) aus, so wird der Wert des Zustand-Feldes EO.10 auf gewählt" (EO.10.5) gesetzt.
   Ergebnis: Der Zustand einer Einladungsoption bzw. eines Einladungsvorschlags wurde geändert.

Die in den Figuren der Zeichnung dargestellten Ausführungsbeispiele und die im Zusammenhang mit diesen erläuterten Anwendungsbeispiele der Erfindung dienen lediglich der Erläuterung der Erfindung und sind für diese nicht beschränkend.

### Bezugszeichenliste:

- 1: Verfahrensschritt (Start)
- 1a: Verfahrensschritt (Startalternative)
- 1b: Verfahrensschritt (Startalternative)
- 2: Verfahrensschritt (Übergabe)
- 3: Verfahrensschritt (Speicherung)
- 4: Verfahrensschritt (Übergabe)
- 5: Verfahrensschritt (Übergabe/Weiterleitung)
- 6: Verfahrensschritt (Übergabe)
- 7: Verfahrensschritt (Triggerung/Anzeige)
- 8: Verfahrensschritt (Speicherung)
- 9: Verfahrensschritt (Anzeige)
- 10: Verfahrensschritt (Auswahl und Anzeige (Alternative))
- 11: Verfahrensschritt (Modifikation)
- 12: Verfahrensschritt (Übergabe)
- 100: Endgerät/Mobilfunktelefon
- 101: Einladungsobjektverwaltungseinrichtung (Einladungsmanager (EM))
- 102: Speichereinrichtung (Einladungsverzeichnis-Inbox (EV-In))
- 103: Einrichtung zur Erstellung und/oder Modifikation von Einladungsobjekten (Einladungsassistent (EA))
- 104: Speichereinrichtung (Einladungsverzeichnis (EV))
- 105: Speichereinrichtung (Einladungsverzeichnis-Outbox (EV-Out))
- 106: Empfang Einladungsobjekt (EO V2)
- 107: empfangenes Einladungsobjekt (EO V2)
- 108: Übergabe empfangenes Einladungsobjekt (EO V2)
- 109: Speicherung empfangenes Einladungsobjekt (EO V2)
- 110: gespeicherte Kopie empfangenes Einladungsobjekt (EO V2)
- 111: Nutzung Speichereinrichtung (Einladungsverzeichnis-Inbox (EV-In) 102)
- 112: Einladungserinnerung (EE)
- 113: Aktivierung Anzeige Einladungsübersicht (EUE)
- 114: Einladungsübersicht (EUE)
- 115: Aufruf Einladungsassistent (EA)
- 116: Nutzung Einladungsassistent (EA, 103)
- 117: Erstellung/Modifikation Einladungsobjekt (EO V4)
- 118: erstelltes/modifiziertes Einladungsobjekt (EO V4)
- 119: Speicherung kumuliertes Einladungsobjekt (EO V3)
- 120: gespeicherte Kopie gesendetes Einladungsobjekt (EO V1)
- 121: gespeicherte Kopie kumuliertes Einladungsobjekt (EO V3)
- 122: gespeicherte Kopie gesendetes Einladungsobjekt (EO V4)
- 123: Nutzung Speichereinrichtung (Einladungsverzeichnis (EV) 104)
- 124: Sendung Einladungsobjekt
- 125: Speicherung gesendetes Einladungsobjekt
- 126: gespeicherte Kopie gesendetes Einladungsobjekt (EO V1)
- 127: gespeicherte Kopie gesendetes Einladungsobjekt (EO V4)
- 200: Endgerät/Mobilfunktelefon
- 201: Anwendung/Funktion (Adressbuch (AB))
- 202: Anwendung/Funktion (LBS Modul (LBS))
- 203: Anwendung/Funktion (Contentverzeichnis (CV))
- 204: Anwendung/Funktion (Menübaum (MB))
- 205: Anwendung/Funktion (Kalender (KD))
- 206: Anwendung/Funktion (Kamera (K))
- 207: Anwendung/Funktion (Netzwerk-Content (NC))
- 208: Speichereinrichtung (Einladungsverzeichnis (EV))
- 209: Einrichtung zur Erstellung und/oder Modifikation von Einladungsobjekten (Einladungsassistent (EA))
- 210: Einladungsobjektverwaltungseinrichtung (Einladungsmanager (EM))
- 211: Sende-/Empfangseinheit (Netzwerkmodul (NM))
- 212: Einladungsübersicht (EUE)
- 213: Endgerät/Mobilfunktelefon
- 214: Sende-/Empfangseinheit (Netzwerkmodul (NM))
- 215: Einladungsobjektverwaltungseinrichtung (Einladungsmanager (EM))
- 216: Einladungserinnerung (EE)
- 217: Speichereinrichtung (Einladungsverzeichnis (EV))
- 218: Einladungsübersicht (EUE)
- 219: Einladungsobjektverwaltungseinrichtung (Einladungsmanager (EM))
- 220: Einrichtung zur Erstellung und/oder Modifikation von Einladungsobjekten (Einladungsassistent (EA))

## Patentansprüche

1. Verfahren zur Verwaltung von aus einem Einladungsobjekt,
welches jeweils wenigstens ein Feld zur Aufnahme
wenigstens einer Information über einen Einladungssender, wenigstens einer Information über wenigstens einen Einladungsempfänger und
wenigstens eines Einladungsvorschlags mit wenigstens einer Information hinsichtlich Zeit, Ort, Zweck, Inhalt und/oder Zustand des Einladungsvorschlags
aufweist,
bestehenden Einladungen mit in Mobilfunknetzen betreibbaren mobilen Endgeräten (100, 200, 213),
wobei seitens eines Endgerätes (100, 200, 213) die folgenden Verfahrensschritte ausgeführt werden:
a) Empfangen eines ersten Einladungsobjektes (EO V2);
b) Erstellen eines zweiten Einladungsobjektes (EO V3) unter Verwendung des empfangenen ersten Einladungsobjektes (EO V2);
c) Anzeigen des erstellten zweiten Einladungsobjektes (EO V3) und
d) Senden des erstellten zweiten Einladungsobjektes (EO V3) an Einladungsbeteiligte;
**dadurch gekennzeichnet, dass**
das empfangene erste Einladungsobjekt (EO V2) in einem ersten Einladungsverzeichnis (EV-In) gespeichert wird,
eine Einrichtung (Modul) des Endgerätes (100, 200, 213) zur Verwaltung von Einladungsobjekten als Einladungsmanager (EM) das zuletzt in einem zweiten Einladungsverzeichnis (EV) gespeicherte dritte Einladungsobjekt (EO V1) über eine zugehörige Einladungsobjekt ID identifiziert,
die Einrichtung (Modul) des Endgerätes (100, 200, 213) zur Verwaltung von Einladungsobjekten als Einladungsmanager (EM) das zweite Einladungsobjekt (EO V3) durch Kumulieren des empfangenen ersten Einladungsobjektes (EO V2) mit dem seitens des Endgerätes (100, 200, 213) vorliegenden dritten Einladungsobjekt (EO V1) erstellt, wobei die Werte der Felder aus dem dritten Einladungsobjekt (EO V1), das im zweiten Einladungsverzeichnis (EV) gespeichert ist, und die Werte des ersten Einladungsobjektes (EO V2) des ersten Einladungsverzeichnisses (EV-In) in das zweite Einladungsobjekt (EO V3) kopiert werden, und
die Einrichtung (Modul) des Endgerätes (100, 200, 213) zur Verwaltung von Einladungsobjekten als Einladungsmanager (EM) das neu erstellte zweite Einladungsobjekt (EO V3) im Einladungsverzeichnis (EV-Out) speichert, und somit eine Einladungsübersicht (EUE) erstellt wird, welche das erste Einladungsobjekt (EO V2) und gleichzeitig bzw. zusätzlich die Reaktionen der Einladungsbeteiligten auf das Einladungsobjekt in einer Überblicks- bzw. Übersichtsdarstellung darstellt.

2. Verfahren nach Anspruch 1, **gekennzeichnet durch** wenigstens eine Modifikation des erstellten zweiten Einladungsobjektes (EO V3) vor dem Senden an Einladungsbeteiligte.

3. Verfahren nach Anspruch 2, **dadurch gekennzeichnet, dass** die Modifikation durch Änderung des Zustandes und/oder eines möglichen Zustandes des empfangenen ersten Einladungsobjektes (EO V2) durch nutzerseitige Reaktion auf das empfangene erste Einladungsobjekt (EO V2) zumindest bei nutzerseitiger Betätigung einer Eingabeeinrichtung des Endgerätes (100, 200, 213) erfolgt.

4. Verfahren nach einem der Ansprüche 1 bis 3,
**gekennzeichnet durch** die folgenden seitens eines Endgerätes (100, 200, 213) ausgeführten Verfahrensschritte:
a1) Empfangen des ersten Einladungsobjektes (EO V2) von einer Empfangseinheit des Endgerätes (100, 200, 213);
a2) Übergeben des empfangenen ersten Einladungsobjektes (EO V2) von der Empfangseinheit an die Einrichtung (Modul) des Endgerätes (100, 200, 213) zur Verwaltung von Einladungsobjekten (Einladungsobjektverwaltungseinrichtung, EM, 101);
b1) Erstellen der Einladungsübersicht (EUE) **durch** Kumulation des empfangenen ersten Einladungsobjektes (EO V2) mit einem in einer zweiten Speichereinheit (EV) des Endgerätes (100, 200, 213) gespeicherten dritten Einladungsobjekt (EO V1) **durch** die Einladungsobjektverwaltungseinrichtung (EM), wobei die Einladungsübersicht (EUE) neben der Darstellung des empfangenen ersten Einladungsobjektes (EO V2) gleichzeitig bzw. zusätzlich die Reaktionen der Einladungsbeteiligten auf das Einladungsobjekt umfasst;
b2) Auslösen einer Erinnerung (EE) an das empfangene erste Einladungsobjekt (EO V2) **durch** die Einladungsobjektverwaltungseinrichtung (EM);
c1) Anzeigen der Einladungsübersicht (EUE) seitens einer Anzeigeeinrichtung des Endgerätes (100, 200, 213) zumindest bei nutzerseitiger Betätigung einer Eingabeeinrichtung des Endgerätes (100, 200, 213) als Aktivierungsauswahl auf die Erinnerung (EE) gemeinsam mit wenigstens einer Information hinsichtlich des Zustandes und/oder eines möglichen Zustandes des empfangenen ersten Einladungsobjektes (EO V2);
c2) Erstellen eines vierten Einladungsobjektes (EO V4) **durch** Änderung des Zustandes und/oder eines möglichen Zustandes des empfangenen ersten Einladungsobjektes (EO V2) **durch** nutzerseitige Reaktion auf das empfangene erste Einladungsobjekt (EO V2) zumindest bei nutzerseitiger Betätigung einer Eingabeeinrichtung des Endgerätes (100, 200, 213) **durch** die Einladungsobjektverwaltungseinrichtung (EM) und
d1) Senden des erstellten vierten Einladungsobjektes (EO V4) an wenigstens einen Einladungsempfänger mittels einer Sendeeinheit des Endgerätes (100, 200, 213) **durch** die Einladungsobjektverwaltungseinrichtung (EM).

5. Verfahren nach einem der Ansprüche 1 bis 4, **gekennzeichnet durch** das Speichern einer Kopie des ersten Einladungsobjektes (EO V2) in einer ersten Speichereinheit (EV-in) für empfangene Einladungsobjekte des Endgerätes (100, 200, 213) **durch** die Einladungsobjektverwaltungseinrichtung (EM).

6. Verfahren nach Anspruch 4 oder Anspruch 5, **gekennzeichnet durch** das Speichern der erzeugten Einladungsübersicht (EUE) als Einladungsobjekt (EO V3) in der zweiten Speichereinheit (EV) **durch** die Einladungsobjektverwaltungseinrichtung (EM).

7. Verfahren nach einem der Ansprüche 4 bis 6, **gekennzeichnet durch** das Speichern des gesendeten vierten Einladungsobjektes (EO V4) in der zweiten Speichereinheit (EV) und/oder in einer dritten Speichereinheit für gesendete Einladungsobjekte (EV-out) **durch** die Einladungsobjektverwaltungseinrichtung (EM).

8. Verfahren nach einem der Ansprüche 4 bis 7, **dadurch gekennzeichnet, dass** Verfahrensschritt b1) mit oder vor Verfahrensschritt b2) ausgeführt wird.

9. Verfahren nach einem der Ansprüche 1 bis 8, **dadurch gekennzeichnet, dass** ein Einladungsobjekt von einem Endgerät (100, 200, 213) eines Einladungssenders über das Mobilfunknetz an ein Endgerät (100, 200, 213) wenigstens eines Einladungsempfängers gesendet wird.

10. Verfahren nach Anspruch 9, **dadurch gekennzeichnet, dass** der wenigstens eine Einladungsempfänger auf wenigstens ein empfangenes Einladungsobjekt durch wenigstens eine Abstimmung reagiert, wobei die Abstimmung eine Reaktion des Einladungsempfängers auf ein empfangenes Einladungsobjekt mit mehreren Einladungsoptionen ist, mit der der Einladungsempfänger zum Ausdruck bringt, welche Einladungsoption bevorzugt wird.

11. Endgerät (100, 200, 213) zum Betrieb in Mobilfunknetzen,
wobei eine Verwaltung von aus einem Einladungsobjekt,
welches jeweils wenigstens ein Feld zur Aufnahme
wenigstens einer Information über einen Einladungssender, wenigstens einer Information über wenigstens einen Einladungsempfänger und
wenigstens eines Einladungsvorschlags mit wenigstens einer Information hinsichtlich Zeit, Ort, Zweck, Inhalt und/oder Zustand des Einladungsvorschlags
aufweist,
bestehenden Einladungen erfolgt,
mit
einer Einrichtung zum Empfangen eines ersten Einladungsobjektes (EO V2),
einer Einrichtung zur Erstellung eines zweiten Einladungsobjektes (EO V3) unter Verwendung des empfangenen ersten Einladungsobjektes (EO V2,V) einer Einrichtung zum Anzeigen des erstellten zweiten Einladungsobjektes (EO V3), und
einer Einrichtung zum Senden des erstellten zweiten Einladungsobjektes (EO V3), an Einladungsbeteiligte,
**dadurch gekennzeichnet, dass**
das empfangene erste Einladungsobjekt (EO V2) in einem ersten Einladungsverzeichnis (EV-In) gespeichert wird,
eine Einrichtung (Modul) des Endgerätes (100, 200, 213) zur Verwaltung von Einladungsobjekten als Einladungsmanager (EM) das zuletzt in einem zweiten Einladungsverzeichnis (EV) gespeicherte dritte Einladungsobjekt (EO V1) über eine zugehörige Einladungsobjekt ID identifiziert,
die Einrichtung (Modul) des Endgerätes (100, 200, 213) zur Verwaltung von Einladungsobjekten als Einladungsmanager (EM) das zweite Einladungsobjekt (EO V3) durch Kumulieren des empfangenen ersten Einladungsobjektes (EO V2) mit dem seitens des Endgerätes (100, 200, 213) vorliegenden dritten Einladungsobjekt (EO V1) erstellt, wobei die Werte der Felder aus dem dritten Einladungsobjekt (EO V1), das im zweiten Einladungsverzeichnis (EV) gespeichert ist, und die Werte des ersten Einladungsobjektes (EO V2) des ersten
Einladungsverzeichnisses (EV-In) in das zweite Einladungsobjekt (EO V3) kopiert werden, und
die Einrichtung (Modul) des Endgerätes (100, 200, 213) zur Verwaltung von Einladungsobjekten als Einladungsmanager (EM) das neu erstellte zweite Einladungsobjekt (EO V3) in einem dritten Einladungsverzeichnis (EV-Out) speichert und somit eine Einladungsübersicht (EUE) erstellt wird, welche das erste Einladungsobjekt (EO V2) und gleichzeitig bzw. zusätzlich die Reaktionen der Einladungsbeteiligten auf das Einladungsobjekt in einer Überblicks- bzw. Übersichtsdarstellung darstellt.

12. Endgerät (100, 200, 213) nach Anspruch 11, **gekennzeichnet, durch** eine Einrichtung zur Modifikation des erstellten zweiten Einladungsobjektes (EO V3).

13. Endgerät (100, 200, 213) nach Anspruch 11 oder Anspruch 12, **gekennzeichnet durch**
eine Einrichtung zur Erstellung von Einladungsobjekten,
wenigstens eine Einrichtung (EV, EV-in, EV-out) zur Speicherung von Einladungsobjekten,
eine Einrichtung zur Versendung von Einladungsobjekten über das Mobilfunknetz,
eine Einrichtung zum Empfang von Einladungsobjekten über das Mobilfunknetz und
eine Einrichtung (101) zur Verwaltung der Erstellung, der Speicherung der Versendung und/oder des Empfangs von Einladungsobjekten.

14. Endgerät (100, 200, 213) nach einem der Ansprüche 11 bis 13, **dadurch gekennzeichnet, dass** die Einrichtung zur Erstellung und/oder Modifikation von Einladungsobjekten wenigstens eine graphische Benutzerschnittstelle (GUI) zur Erfassung von Dokumenten aufweist.

15. Endgerät (100, 200, 213) nach einem der Ansprüche 11 bis 14, **dadurch gekennzeichnet, dass** die Einrichtung zur Erstellung und/oder Modifikation von Einladungsobjekten wenigstens eine Schnittstelle aufweist, welche einen Zugriff auf wenigstens einen Teil einer Datenbank und/oder wenigstens eine Nutzung wenigstens eines Teils eines Anwendungsprogramms und/oder einer Funktionalität des Endgerätes (100, 200, 213) ermöglicht.

## Claims

1. A method for the management of invitations by mobile terminals (100, 200, 213) which can be operated in mobile radio networks, which invitations consist of an invitation object
which respectively comprises at least one field for receiving at least one information about an invitation sender,
at least one information about at least one invitation recipient and
at least one invitation proposal with at least one information about the time, the location, the purpose, the content and/or the condition of the invitation proposal,
wherein the following process steps are carried out by a terminal (100, 200, 213):
a) receiving a first invitation object (EO V2);
b) creating a second invitation object (EO V3) by using the first received invitation object (EO V2);
c) displaying the created second invitation object (EO V3) and
d) sending the created second invitation object (EO V3) to invitation participants;
**characterized in that**
the received first invitation object (EO V2) is stored in a first invitation register (EV-In),
a device (module) of the terminal (100, 200, 213) for managing invitation objects identifies, as invitation manager (EM), the third invitation object (EO V1), which was most recently stored in a second invitation register (EV), by means of an associated invitation object ID,
the device (module) of the terminal (100, 200, 213) for managing invitation objects creates, as invitation manger (EM), the second invitation object (EO V3) by cumulating the received first invitation object (EO V2) with the third invitation object (EO V1) presented by the terminal (100, 200, 213); wherein the values of the fields of the third invitation object (EO V1) which is stored in the second invitation register (EV) and the values of the first invitation object (EO V2) of the first invitation register (EV-In) are copied into the second invitation object (EO V3), and
the device (module) of the terminal (100, 200, 213) for managing invitation objects stores, as invitation manager (EM), the newly created second invitation object (EO V3) in the invitation register (EV-Out); and
an invitation survey (EUE) is thus created which represents the first invitation object (EO V2) and simultaneously or additionally shows the reactions of the invitation participants to the invitation object as an overview or a survey.

2. A method according to claim 1, **characterized by** at least one modification of the created second invitation object (EO V3) before sending it to invitation participants.

3. A method according to claim 2, **characterized in that** the modification is realized by changing the condition and/or a possible condition of the first received invitation object (EO V2) by means of a reaction of the user to the received first invitation object (EO V2), at least if the user actuates an input device of the terminal (100, 200, 213).

4. A method according to one of the claims 1 through 3,
**characterized by** the following process steps carried out by means of a terminal (100, 200, 213):
a1) receiving the first invitation object (EO V2) from a reception unit of the terminal (100, 200, 213);
a2) transmitting the received first invitation object (EO V2) from the reception unit to the device (module) of the terminal (100, 200, 213) for managing invitation objects (invitation object management device, EM, 101);
b1) creating the invitation survey (EUE) by cumulating the first received invitation object (EO V2) with a third invitation object (EO V1) stored in a second storage unit (EV) of the terminal (100, 200, 213) by means of the invitation object management device (EM), wherein the invitation survey (EUE) simultaneously or additionally comprises, apart from the representation of the received first invitation object (EO V2), the reactions of the invitation participants to the invitation object;
b2) releasing a reminder (EE) of the received first invitation object (EO V2) by the invitation object management device (EM);
c1) displaying the invitation survey (EUE) by a display device of the terminal (100, 200, 213), at least if a user actuates the input device of the terminal (100, 200, 213), as an activation selection in response to the reminder (EE), together with at least one information with respect to the condition and/or a possible condition of the received first invitation object (EO V2);
c2) creating a fourth invitation object (EO V4) by modifying the condition and/or a possible condition of the received first invitation object (EO V2) by a user's reaction to the received first invitation object (EO V2), at least if a user actuates the input device of the terminal (100, 200, 213), by the invitation object management device (EM) and
d1) sending the created fourth invitation object (EO V4) to at least one invitation recipient by means of a sender unit of the terminal (100, 200, 213) by the invitation object management device (EM).

5. A method according to one of the claims 1 through 4, **characterized by** storing a copy of the first invitation object (EO V2) in a first storage unit (EV-in) for received invitation objects of the terminal (100, 200, 213) by means of the invitation object management device (EM).

6. A method according to claim 4 or claim 5, **characterized by** storing the created invitation survey (EUE) as invitation object (EO V3) in the second storage unit (EV) by means of the invitation object management device (EM).

7. A method according to one of the claims 4 through 6, **characterized by** storing the sent fourth invitation object (EO V4) in the second storage unit (EV) and/or in a third storage unit for sent invitation objects (EV-out) by means of the invitation object management device (EM).

8. A method according to one of the claims 4 through 7, **characterized in that** process step b1) is carried out together with or before process step b2).

9. A method according to one of the claims 1 through 8, **characterized in that** an invitation object is sent from a terminal (100, 200, 213) of an invitation sender via the mobile radio network to a terminal (100, 200, 213) of at least one invitation recipient.

10. A method according to claim 9, **characterized in that** the at least one invitation recipient reacts to at least one received invitation object by at least one vote, wherein the vote is a reaction of the invitation recipient to a received invitation object comprising several invitation options, by means of which vote the invitation recipient expresses his preference for one invitation option.

11. A terminal (100, 200, 213) for being operated in mobile radio networks,
wherein a management of invitations is carried out, which invitations consist of an invitation object
which respectively comprises at least one field for receiving
at least one information about an invitation sender,
at least one information about at least one invitation recipient and
at least one invitation proposal with at least one information about the time, the location, the purpose, the content and/or the condition of the invitation proposal,
comprising a device for receiving a first invitation object (EO V2),
a device for creating a second invitation object (EO V3) by using the first received invitation object (EO V2);
a device for displaying the created second invitation object (EO V3) and
a device for sending the created second invitation object (EO V3) to invitation participants;
**characterized in that**
the received first invitation object (EO V2) is stored in a first invitation register (EV-In),
a device (module) of the terminal (100, 200, 213) for managing invitation objects identifies, as invitation manager (EM), the third invitation object (EO V1), which was most recently stored in a second invitation register (EV), by means of an associated invitation object ID,
the device (module) of the terminal (100, 200, 213) for managing invitation objects creates, as invitation manger (EM), the second invitation object (EO V3) by cumulating the received first invitation object (EO V2) with the third invitation object (EO V1) presented by the terminal (100, 200, 213); wherein the values of the fields of the third invitation object (EO V1) which is stored in the second invitation register (EV) and the values of the first invitation object (EO V2) of the first invitation register (EV-In) are copied into the second invitation object (EO V3), and
the device (module) of the terminal (100, 200, 213) for managing invitation objects stores, as invitation manager (EM), the newly created second invitation object (EO V3) in a third invitation register (EV-Out); and
an invitation survey (EUE) is thus created which represents the first invitation object (EO V2) and simultaneously or additionally shows the reactions of the invitation participants to the invitation object as an overview or a survey.

12. A terminal (100, 200, 213) according to claim 11, **characterized by** a device for the modification of the created second invitation object (EO V3).

13. A terminal (100, 200, 213) according to claim 11 or claim 12, **characterized by**
a device for creating invitation objects,
at least one device (EV, EV-in, EV-out) for storing invitation objects,
a device for sending invitation objects via the mobile radio network,
a device for receiving invitation objects via the mobile radio network and
a device (101) for managing the creation, the storage, the sending and/or the reception of invitation objects.

14. A terminal (100, 200, 213) according to one of the claims 11 through 13, **characterized in that** the device for creating and/or modifying invitation objects at least comprises one graphic user interface (GUI) for gathering documents.

15. A terminal (100, 200, 213) according to one of the claims 11 through 14, **characterized in that** the device for creating and/or modifying invitation objects at least comprises one interface which enables an access to at least a part of a database and/or at least a use of at least a part of an application program and/or a functionality of the terminal (100, 200, 213).

## Revendications

1. Procédé de gestion d'invitations par des terminaux mobiles (100, 200, 213) pouvant fonctionner dans des réseaux radio mobiles, les invitations étant composées d'un objet d'invitation
qui comprend respectivement au moins une zone destinée à recevoir au moins une information sur un expéditeur d'invitation,
au moins une information sur au moins un récepteur d'invitation et
au moins une proposition d'invitation comprenant au moins une information par rapport à l'heure, au lieu, au but, au contenu et/ou à l'état de la proposition d'invitation,
dans lequel les étapes de procédé suivantes sont effectuées par un terminal (100, 200, 213):
a) recevoir un premier objet d'invitation (EO V2);
b) créer un deuxième objet d'invitation (EO V3) en utilisant le premier objet d'invitation (EO V2) reçu ;
c) afficher le deuxième objet d'invitation créé (EO V3) et
d) envoyer le deuxième objet d'invitation créé (EO V3) à des participants à l'invitation;
**caractérisé en ce que**
le premier objet d'invitation reçu (EO V2) est mémorisé dans un premier registre d'invitations (EV-in),
un dispositif (module) du terminal (100, 200, 213) destiné à gérer des objets d'invitation identifie en tant que gérant d'invitations (EM) le troisième objet d'invitation (EO V1), qui a été récemment mémorisé dans un deuxième registre d'invitations (EV), par moyen d'une ID d'objet d'invitation associée,
le dispositif (module) du terminal (100, 200, 213) destiné à gérer des objets d'invitation crée en tant que gérant d'invitations (EM) le deuxième objet d'invitation (EO V3) par cumulation du premier objet d'invitation reçu (EO V2) avec le troisième objet d'invitation (EO V1) présenté par le terminal (100, 200, 213), les valeurs des zones du troisième objet d'invitation (EO V1) qui est mémorisé dans le deuxième registre d'invitations (EV) et les valeurs du premier objet d'invitation (EO V2) du premier registre d'invitations (EV-in) étant copiées dans le deuxième objet d'invitation (EO V3), et
le dispositif du terminal (100, 200, 213) destiné à gérer des objets d'invitation mémorise en tant que gérant d'invitations (EM) le deuxième objet d'invitation (EO V3) nouvellement créé dans le registre d'invitations (EV-Out), et
une liste d'invitations (EUE) est ainsi dressée qui représente le premier objet d'invitation (EO V2) et simultanément ou supplémentairement les réactions des participants à l'invitation à l'objet d'invitation sous forme d'une vue d'ensemble ou d'un aperçu.

2. Procédé selon la revendication 1, **caractérisé par** au moins une modification du deuxième objet d'invitation créé (EO V3) avant qu'il soit envoyé à des participants à l'invitation.

3. Procédé selon la revendication 2, **caractérisé en ce que** la modification se fait par changement de l'état et/ou d'un état possible du premier objet d'invitation reçu (EO V2) par une réaction de l'utilisateur au premier objet d'invitation reçu (EO V2), au moins si l'utilisateur actionne un dispositif d'entrée du terminal (100, 200, 213).

4. Procédé selon l'une des revendications 1 à 3,
**caractérisé par** les étapes de procédé suivantes effectuées par un terminal (100, 200, 213) :
a1) recevoir le premier objet d'invitation (EO V2) d'une unité de réception du terminal (100, 200, 213) ;
a2) transmettre le premier objet d'invitation reçu (EO V2) de l'unité de réception au dispositif (module) du terminal (100, 200, 213) destiné à gérer des objets d'invitation (dispositif de gestion d'objets d'invitation, EM, 101) ;
b1) dresser une liste d'invitations (EUE) par cumulation du premier objet d'invitation reçu (EO V2) avec un troisième objet d'invitation (EO V1) mémorisé dans une deuxième unité de mémoire (EV) du terminal (100, 200, 213) par moyen du dispositif de gestion d'objets d'invitation (EM), la liste d'invitations (EUE) comprenant, outre la représentation du premier objet d'invitation reçu (EO V2), simultanément ou supplémentairement les réactions des participants à l'invitation à l'objet d'invitation ;
b2) déclencher un rappel (EE) du premier objet d'invitation reçu (EO V2) par le dispositif de gestion d'objets d'invitation (EM) ;
c1) afficher la liste d'invitations (EUE) par un dispositif d'affichage du terminal (100, 200, 213), au moins si l'utilisateur actionne un dispositif d'entrée du terminal (100, 200, 213), en tant que sélection d'activation en réponse au rappel (EE), ensemble avec au moins une information par rapport à l'état et/ou à un état possible du premier objet d'invitation reçu (EO V2) ;
c2) créer un quatrième objet d'invitation (EO V4) par modification de l'état et/ou d'un état possible du premier objet d'invitation reçu (EO V2) par le dispositif de gestion d'objets d'invitation (EM) par une réaction de l'utilisateur au premier objet d'invitation reçu (EO V2), au moins si l'utilisateur actionne un dispositif d'entrée du terminal (100, 200, 213), et
d1) envoyer le quatrième objet d'invitation créé (EO V4) à au moins un récepteur d'invitation par le dispositif de gestion d'objets d'invitation (EM) par moyen d'une unité émettrice du terminal (100, 200, 213).

5. Procédé selon l'une des revendications 1 à 4, **caractérisé par** la mémorisation d'une copie du premier objet d'invitation (EO V2) dans une première unité de mémoire (EV-in) pour des objets d'invitation reçus du terminal (100, 200, 213) par le dispositif de gestion d'objets d'invitation (EM).

6. Procédé selon la revendication 4 ou la revendication 5, **caractérisé par** la mémorisation de la liste d'invitations créée (EUE) en tant que objet d'invitation (EO V3) dans la deuxième unité de mémoire (EV) par le dispositif de gestion d'objets d'invitation (EM).

7. Procédé selon l'une des revendications 4 à 6, **caractérisé par** la mémorisation du quatrième objet d'invitation envoyé (EO V4) dans la deuxième unité de mémoire (EV) et/ou dans une troisième unité de mémoire pour des objets d'invitation envoyés (EV-out) par le dispositif de gestion d'objets d'invitation (EM).

8. Procédé selon l'une des revendications 4 à 7, **caractérisé en ce que** l'étape de procédé b1) est effectuée avec ou avant l'étape de procédé b2).

9. Procédé selon l'une des revendications 1 à 8, **caractérisé en ce qu'**un objet d'invitation est envoyé d'un terminal (100, 200, 213) d'un expéditeur d'invitation via le réseau radio mobile à un terminal (100, 200, 213) d'au moins un récepteur d'invitation.

10. Procédé selon la revendication 9, **caractérisé en ce que** l'au moins un récepteur d'invitation réagit à au moins un objet d'invitation reçu par au moins un vote, le vote étant une réaction du récepteur d'invitation à un objet d'invitation reçu comprenant plusieurs options d'invitation, le récepteur d'invitation exprimant par le vote sa préférence pour une option d'invitation.

11. Terminal (100, 200, 213) pouvant fonctionner dans des réseaux radio mobiles,
dans lequel une gestion d'invitations est effectué, lesquelles invitations sont composées d'un objet d'invitation
qui comprend respectivement au moins une zone destinée à recevoir
au moins une information sur un expéditeur d'invitation,
au moins une information sur au moins un récepteur d'invitation et
au moins une proposition d'invitation comprenant au moins une information par rapport à l'heure, au lieu, au but, au contenu et/ou à l'état de la proposition d'invitation,
comprenant
un dispositif pour recevoir un premier objet d'invitation (EO V2) ;
un dispositif pour créer un deuxième objet d'invitation (EO V3) en utilisant le premier objet d'invitation (EO V2) reçu ;
un dispositif pour afficher le deuxième objet d'invitation créé (EO V3) et
un dispositif pour envoyer le deuxième objet d'invitation créé (EO V3) à des participants à l'invitation ;
**caractérisé en ce que**
le premier objet d'invitation reçu (EO V2) est mémorisé dans un premier registre d'invitations (EV-in),
un dispositif (module) du terminal (100, 200, 213) destiné à gérer des objets d'invitation identifie en tant que gérant d'invitations (EM) le troisième objet d'invitation (EO V1), qui a été récemment mémorisé dans un deuxième registre d'invitations (EV), par moyen d'une ID d'objet d'invitation associée,
le dispositif (module) du terminal (100, 200, 213) destiné à gérer des objets d'invitation crée en tant que gérant d'invitations (EM) le deuxième objet d'invitation (EO V3) par cumulation du premier objet d'invitation reçu (EO V2) avec le troisième objet d'invitation (EO V1) présenté par le terminal (100, 200, 213), les valeurs des zones du troisième objet d'invitation (EO V1) qui est mémorisé dans le deuxième registre d'invitations (EV) et les valeurs du premier objet d'invitation (EO V2) du premier registre d'invitations (EV-in) étant copiées dans le deuxième objet d'invitation (EO V3), et
le dispositif du terminal (100, 200, 213) destiné à gérer des objets d'invitation mémorise en tant que gérant d'invitations (EM) le deuxième objet d'invitation (EO V3) nouvellement créé dans le registre d'invitations (EV-Out), et
une liste d'invitations (EUE) est ainsi dressée qui représente le premier objet d'invitation (EO V2) et simultanément ou supplémentairement les réactions des participants à l'invitation à l'objet d'invitation sous forme d'une vue d'ensemble ou d'un aperçu.

12. Terminal (100, 200, 213) selon la revendication 11, **caractérisé par** un dispositif destiné à la modification du deuxième objet d'invitation créé (EO V3).

13. Terminal (100, 200, 213) selon la revendication 11 ou la revendication 12, **caractérisé par**
un dispositif destiné à la création des objets d'invitation,
au moins un dispositif (EV, EV-in, EV-out) destiné à la mémorisation des objets d'invitation,
un dispositif destiné à envoyer des objets d'invitation via le réseau radio mobile,
un dispositif destiné à recevoir des objets d'invitation via le réseau radio mobile et
un dispositif (101) destiné à gérer la création, la mémorisation, l'envoi et/ou la réception des objets d'invitation.

14. Terminal (100, 200, 213) selon l'une des revendications 11 à 13, **caractérisé en ce que** le dispositif destiné à la création et/ou à la modification des objets d'invitation comprend au moins une interface utilisateur graphique (GUI) pour saisir des documents.

15. Terminal (100, 200, 213) selon l'une des revendications 11 à 14, **caractérisé en ce que** le dispositif destiné à la création et/ou à la modification des objets d'invitation comprend au moins une interface qui permet un accès à au moins une partie d'une base de données et/ou au moins une utilisation d'au moins une partie d'un programme d'application et/ou d'une fonctionnalité du terminal (100, 200, 213).
